# EUROPÄISCHE PATENTSCHRIFT

(11) **EP 3 466 756 B1**
(45) Veröffentlichungstag und Bekanntmachung des Hinweises auf die Patenterteilung: **23.02.2022**
(21) Anmeldenummer: 18187612.9
(22) Anmeldetag: 06.08.2018
(51) Int. Cl.: F21S 43/241, F21S 43/249, F21S 43/50, F21S 43/14, F21V 8/00

(54) **ANIMIERBARER KASKADENLICHTLEITER**
ANIMATABLE CASCADE LIGHT CONDUCTOR
CONDUIT DE LUMIÈRE EN CASCADE POUVANT ÊTRE ANIMÉ

(30) Priorität: 05.10.2017 DE 102017217736
(43) Veröffentlichungstag der Anmeldung: 10.04.2019
(73) Patentinhaber: odelo GmbH, 70329 Stuttgart (DE)
(72) Erfinder: BISCH, Valentin, 70186 Stuttgart (DE); DEGER, Rüdiger, 73728 Esslingen (DE)
(74) Vertreter: Benninger, Johannes

(56) Entgegenhaltungen:
- EP-A1- 2 824 387
- EP-A1- 2 927 572
- DE-T5-112014 003 091
- US-A1- 2014 376 258
- US-A1- 2015 316 227

## Beschreibung

Die Erfindung betrifft einen Lichtleiter mit den Merkmalen des Anspruchs 1, ein Leuchtmittel mit den Merkmalen des Anspruchs 6, eine Fahrzeugleuchte mit den Merkmalen des Anspruchs 9 sowie ein Verfahren zur dynamischen, segmentweisen Ausleuchtung eines Lichtleiters mit den Merkmalen des Anspruchs 12.

Die Erfindung beschäftigt sich mit der Verbesserung der Sicht- und Wahrnehmbarkeit von Lichtfunktionen von Fahrzeugleuchten durch dynamische Darstellung einer Lichtfunktion.

Insbesondere betrifft die Erfindung einen kurz als animierbaren Kaskadenlichtleiter bezeichneten Lichtleiter, dessen durch ihn verwirklichte Lichtfunktion kaskadenartig aufleb- beziehungsweise animierbar ist.

Eine Fahrzeugleuchte umfasst beispielsweise einen im Wesentlichen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Fahrzeugleuchte.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte. Beispiele für Fahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Für die einzelnen Lichtfunktionen sind zum Teil unterschiedliche Helligkeiten bzw. Sichtweiten sowie zum Teil unterschiedliche Lichtfarben zugeordnet.

Wenigstens einer Lichtquelle des Leuchtmittels einer Fahrzeugleuchte können ein oder mehrere zur Ausformung einer Lichtverteilung beitragende Optikelemente zur Lichtlenkung zugeordnet sein.

Die Lichtscheibe ist durch eine heutzutage meist aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein. Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Um die Wahrnehmbarkeit beziehungsweise Wahrnehmungskraft von Lichtfunktionen einer Fahrzeugleuchte für andere Verkehrsteilnehmer zu erhöhen ist bekannt, diese innerhalb der gesetzlich zugelassenen Grenzen aufleben zu lassen beziehungsweise zu animieren.

Ein bekanntes Beispiel sind so genannte dynamische Lichtfunktionen, bei denen die vom Gesetzgeber eingeräumte Zeit, die eine Glühlampe als eine gesetzlich erlaubte Lichtquelle eines zur Erfüllung einer Lichtfunktion vorgesehenen Leuchtmittels benötigt, um ihre volle Leuchtstärke zu erreichen, genutzt wird, um einen visuellen Effekt zu erzielen.

Ein Beispiel eines solchen visuellen Effekts ist das Wischen in Richtung der Richtung einer beabsichtigten Fahrtrichtungsanzeige bei einer Wiederholblinklichtfunktion eines Fahrtrichtungsanzeigers. Untersuchungen haben gezeigt, dass hierdurch die Verkehrssicherheit erhöht wird, da durch das Wischen bereits bei Beginn der Wahrnehmung der Lichtfunktion durch andere Verkehrsteilnehmer die durch die Lichtfunktion angezeigte beabsichtigte Fahrtrichtungsänderung von den anderen Verkehrsteilnehmern erkannt wird.

In der Automobilbeleuchtung kommen vermehrt animierbare Lichtfunktionen zum Einsatz, beispielsweise - ohne Anspruch auf Vollständigkeit der nachfolgenden Aufzählung - als Signalisierung beim Öffnen und Schließen der Fahrzeugverriegelung als so genanntes coming and leaving home, der zuvor bereits erwähnte dynamischer Blinker, aber auch als Abgrenzung für die zukunftsträchtige eMobilität.

Bekannt ist zur Verwirklichung das Einschalten einer Lichtquelle nach der anderen einer Reihe von Lichtquellen eines Leuchtmittels.

Dies setzt konventionelle Reflektoren oder diffuse Systeme mit mehreren animierabaren Lichtquellen und Platinenflächen über der den ganzen Funktionsbereich der mit Lichtquellen bedeckten Leuchtfläche.

Nachteilig hieran ist einerseits der Bedarf ausgedehnter Platinenflächen sowie die einen negativen Qualitätseindruck nach sich ziehende inhomogene Anmutung der durch eine Vielzahl punktförmiger Lichtquellen gebildeten Leuchtfläche.

Oft ist das kostengünstigste und zugleich auch homogenste optische Konzept zur Ausleuchtung einer Lichtfunktion ein Lichtleiter, da dadurch Lichtquellen, Bauteile und Platinenflächen auf ein Minimum reduziert werden können. Nachteilig ist, dass diese Einquellenlösungen aber nicht mehr sinnvoll animierbar sind.

Durch US 2016/0369967 A1 ist ein Lichtleiter bekannt, der einen Auskoppellichtleiter umfasst, der von einer Vielzahl von Zuführungslichtleitern flankiert ist. Dem Auskoppellichtleiter ist eine eigene Lichtquelle an einem seiner gegenüberliegenden Enden zugeordnet. Die Zuführungslichtleiter sind mittels eines Überkopplungslichtleiters mit dem Auskoppellichtleiter verbunden. Der Überkopplungslichtleiter ist über seine gesamte Länge mit dem Auskoppellichtleiter verbunden. Gegenüberliegend dem Auskoppellichtleiter ist der Überkopplungslichtleiter sägezahnartig mit benachbart rechtwinklig zueinander angeordneten Sägezahnabschnitten ausgebildet. Entlang jedes zweiten, in gleicher, paralleler Richtung verlaufenden Sägezahnabschnitts ist jeweils einer der Zuführungslichtleiter angeordnet. Ein gefangenes Ende der beiden gegenüberliegenden Enden jeden Zuführungslichtleiters liegt dabei in einem Inneneck zwischen benachbarten, rechtwinklig zueinander verlaufenden Sägezahnabschnitten des Überkopplungslichtleiters. Den jeweiligen gefangenen Enden gegenüberliegenden freien Enden der Zuführungslichtleiter ist jeweils eine Lichtquelle zugeordnet. Von diesen Lichtquellen in die Zuführungslichtleiter ausgestrahltes Licht propagiert in gleicher Ausbreitungsrichtung parallel zueinander. Jeder Zuführungslichtleiter flankiert den Auskoppellichtleiter jeweils nur entlang eines Teilstücks. Durch Einschalten der einem der Zuführungslichtleiter zugeordneten Lichtquelle wird nur das jeweilige Teilstück des Auskoppellichtleiters ausgeleuchtet, welches von dem jeweiligen Zuführungslichtleiter flankiert ist. Eine vollständige Ausleuchtung wird durch Betrieb aller den Zuführungslichtleitern zugeordneten Lichtquellen erhalten. Alternativ kann eine veränderliche Intensität der Ausleuchtung des Auskoppellichtleiters erhalten werden, wobei durch Betrieb der dem Auskoppellichtleiter zugeordneten Lichtquelle die schwächste Intensität, durch Betrieb der den Zuführungslichtleitern zugeordneten Lichtquellen eine mittlere Intensität, und durch Betrieb sowohl der dem Auskoppellichtleiter zugeordneten Lichtquelle, als auch der den Zuführungslichtleitern zugeordneten Lichtquellen eine hohe Intensität erhalten wird.

Durch US 2014/0376258 ist ein Lichtleiter mit einer an einem Ende des Lichtleiters angeordneten Lichtquelle bekannt. Der Lichtleiter weist eine Auskoppelstruktur auf, die sowohl Licht, das sich von einer der Lichtquelle zugeordneten Lichteinkoppelfläche aus in einer ersten Richtung ausbreitet, als auch Licht, welches am der Lichteinkoppelfläche gegenüberliegenden Ende innerhalb des Lichtleiters in eine der ersten Richtung entgegengesetzte, zweite Richtung reflektiert worden ist und sich dadurch in entgegengesetzter, zweiter Richtung in dem Lichtleiter ausbreitet, aus dem Lichtleiter auskoppelt.

Durch US 2015/219818 A1 ist ein Leuchtmittel mit einem Lichtleiter und mehreren Hohllichtleitern sowie mehreren Lichtquellen bekannt. Entlang seiner Längsausdehnung ist der Lichtleiter ist in mehrere Teilstücke unterteilt. Jeder Teilabschnitt hat eine Lichteinkoppel- und eine Lichtauskoppelpartie. Jeder Lichteinkoppelpartie ist ein Ende eines Hohllichtleiters zugeordnet, an dessen gegenüberliegendem Ende eine Lichtquelle angeordnet ist. Durch Einschalten der Lichtquellen unterschiedlicher Hohllichtleiter werden verschiedene Teilstücke des Lichtleiters ausgeleuchtet.

Durch FR 3 047 295 A1 ist ein segmentiertes Leuchtmittel vorbekannt, das mehrere Lichtleiter umfasst. Die Lichtleiter weisen an einem ihrer Enden jeweils eine Lichtquelle auf. Gemäß einer Ausgestaltung sind die Lichtleiter nebeneinander angeordnet und unterschiedlich lang ausgeführt. Jeder kürzere Lichtleiter koppelt sein Licht in den jeweils längsten Lichtleiter über, so dass dieser innerhalb eines in seiner Ausdehnung mit dem kürzeren Lichtleiter übereinstimmenden Bereichs ausgeleuchtet wird. Eine vollständige Ausleuchtung des längsten Lichtleiters erfolgt durch Lichteinstrahlung einer Lichtquelle in dessen Ende. Eine andere Ausgestaltung sieht mehrere nebeneinander angeordnete Lichtleiter vor, deren Lichtauskoppelbereiche einander überlappen und von einem Lichtleiter zum nächsten einander überragen. Eine weitere Ausgestaltung sieht eine Hintereinanderreihung der Lichtauskoppelbereiche mehrerer Lichtleiter vor.

Durch DE 11 2014 003 091 T5 ist ein Lichtleiter bekannt, umfassend einen Auskoppellichtleiter, der von mindestens zwei Zuführungslichtleitern abschnittsweise flankiert ist. Der Auskoppellichtleiter umfasst eine sich über zumindest einen Teil dessen Längsausdehnung erstreckende Lichtaustrittsfläche für in ihn eingekoppeltes Licht und mindestens eine zur Einkopplung von von einer ersten Lichtquelle abgestrahltes Licht vorgesehene Auskoppellichtleiter-Lichteinkoppelfläche. Jeder Zuführungslichtleiter weist zwei gegenüberliegende Stirnseiten auf, die jeweils als Zuführungslichtleiter-Lichteinkoppelfläche zur Einkopplung von von je mindestens einer weiteren Lichtquelle abgestrahlten Lichts ausgeführt sein können. Die Zuführungslichtleiter und der Auskoppellichtleiter sind zumindest an Lichtüberkopplungsflächen, innerhalb denen Licht der Zuführungslichtleiter jeweils in den Auskoppellichtleiter übergekoppelt wird, zumindest optisch wirksam miteinander verbunden. Die Lichtaustrittsfläche ist in individuell ausleuchtbare Partien unterteilt, aus denen abhängig vom Betrieb der Lichtquellen an den Enden der Zuführungslichtleiter und abhängig vom Betrieb der Lichtquellen des Auskoppellichtleiters Licht austritt. Die Zuführungslichtleiter und/oder der Auskoppellichtleiter weisen eine derartige Auskoppelstruktur auf, dass eine Ausleuchtung der Lichtaustrittsfläche des Auskoppellichtleiters in Abhängigkeit davon erfolgt, ob in den Auskoppellichtleiter, oder in die Zuführungslichtleiter Licht eingekoppelt wird. Darüber hinaus weisen die Zuführungslichtleiter und/oder der Auskoppellichtleiter eine derartige Auskoppelstruktur auf, dass eine segmentweise Ausleuchtung der Lichtaustrittsfläche des Auskoppellichtleiters in Abhängigkeit davon erfolgt, in welchen Zuführungslichtleiter Licht eingekoppelt wird.

Durch EP 2 824 387 A1 ist ein Lichtleiterelement mit einer Lichtauskoppelpartie und einer parallel zu dieser angeordneten Lichteinkoppelpartie bekannt. Zwischen die beiden Partien ist zumindest abschnittsweise eine Schicht spiegelnder und/oder opaker und/oder lichtumlenkender und/oder lichtauskoppelnder Elemente eingebracht, die für eine der beiden Partien eine optisch wirksame Oberfläche bildet. Eine Variation der Abmessungen der Abschnitte steuert gezielt die Lichtzuführung und/oder Lichtauskopplung des Lichtleiterelements.

Durch US 2014/376258 A1 ist bekannt, eine Lichtumlenkung innerhalb eines plattenförmigen Lichtleiterelements durch Prismenstrukturen derart einzustellen, dass eine homogene Ausleuchtung einer Lichtauskoppelfläche des Lichtleiterelements erhalten wird.

Eine Aufgabe der Erfindung ist die Bereitstellung eines kompakten Lichtleiters und eines mit einem solchen ausgestatteten Leuchtmittels zur Verwirklichung einer dynamischen Lichtfunktion, sowie einer Fahrzeugleuchte mit mindestens einem zur Erfüllung wenigstens einer Lichtfunktion der Fahrzeugleuchte vorgesehenen oder einer vorgeschriebenen Lichtverteilung einer solchen Lichtfunktion beitragenden Leuchtmittel mit zumindest einer Lichtquelle, welche einer erhöhten Verkehrssicherheit beiträgt und gleichzeitig kompakt aufgebaut ist. Darüber hinaus ist es eine Aufgabe der Erfindung ein Verfahren anzugeben, mit dem eine Leuchtfläche eines kompakten Lichtleiters dynamisch segmentweise ausgeleuchtet werden kann.

Die Aufgabe wird jeweils durch die Merkmale der unabhängigen Ansprüche gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Ein erster Gegenstand der Erfindung betrifft demnach einen Lichtleiter umfassend einen zentralen Auskoppellichtleiter, der von mindestens zwei parallel zu seiner Längserstreckung verlaufenden und versteckt anordbaren Zuführungslichtleitern flankiert ist. Jeder Zuführungslichtleiter flankiert den Auskoppellichtleiter bevorzugt zumindest entlang dessen gesamter Lichtaustrittsfläche, beispielsweise entlang dessen gesamter Längserstreckung.

Der Lichtleiter umfasst:
- den zentralen Auskoppellichtleiter mit einer sich über zumindest einen Teil dessen Längsausdehnung erstreckenden Lichtaustrittsfläche für in ihn eingekoppeltes Licht und mit mindestens einer zur Einkopplung von von einer ersten Lichtquelle abgestrahlten Lichts vorgesehenen Auskoppellichtleiter-Lichteinkoppelfläche,
- zwei parallel zum Auskoppellichtleiter verlaufende, versteckt anordbare und sich jeweils bevorzugt zumindest entlang der gesamten Lichtaustrittsfläche des Auskoppellichtleiters in Richtung dessen Längsausdehnung erstreckende Zuführungslichtleiter mit jeweils zwei gegenüberliegenden Enden und jeweils einer Zuführungslichtleiter-Lichteinkoppelfläche je Ende jeden Zuführungslichtleiters zur Einkopplung von von einer zweiten, einer dritten, einer vierten und einer fünften und so weiter Lichtquelle abgestrahlten Lichts,
wobei die Zuführungslichtleiter und der Auskoppellichtleiter zumindest an Lichtüberkopplungsflächen, innerhalb denen Licht der Zuführungslichtleiter jeweils in den Auskoppellichtleiter übergekoppelt wird, zumindest optisch wirksam miteinander verbunden sind, und
die Lichtaustrittsfläche in individuell ausleuchtbare Partien unterteilt ist, aus denen abhängig vom Betrieb der Lichtquellen an den Enden der Zuführungslichtleiter und abhängig vom Betrieb der Lichtquellen des Auskoppellichtleiters Licht austritt, und
die Anzahl der individuell ausleuchtbaren Partien der Lichtaustrittsfläche des Auskoppellichtleiters mindestens der doppelten Zahl der Zuführungslichtleiter entspricht, entsprechend der Anzahl der Enden der Zuführungslichtleiter, und
die Zuführungslichtleiter und/oder der Auskoppellichtleiter eine derart gestaltete Auskoppelstruktur aufweisen, dass eine segmentweise Ausleuchtung des Auskoppellichtleiters in Abhängigkeit davon erfolgt, in welchem Zuführungslichtleiter Licht von welcher Zuführungslichtleiter-Lichteinkoppelfläche aus eingekoppelt wird. Die volle Ausleuchtung des Auskoppellichtleiters kann durch Lichteinstrahlung via der Auskoppellichtleiter-Lichteinkoppelfläche erhalten werden.

Die Aussage einer Einkopplung von von einer zweiten, einer dritten, einer vierten und einer fünften und so weiter Lichtquelle abgestrahlten Lichts bezieht sich hierbei auf die Grundaussage, wonach dem Auskoppellichtleiter mindestens an einem seiner gegenüberliegenden Enden eine erste Lichtquelle zugeordnet ist, und mindestens zweier Zuführungslichtleiter, denen an ihren jeweiligen gegenüberliegenden Enden - bei zwei Zuführungslichtleitern demnach insgesamt vier Enden - eine zweite, eine dritte, eine vierte und eine fünfte Lichtquelle zugeordnet sind. Bei jedem zu den mindestens zwei Zuführungslichtleitern hinzukommenden Zuführungslichtleiter erhöht sich die Zahl der zugeordneten Lichtquellen entsprechend um zwei, entsprechend der im Vergleich zu der hinzukommenden Zahl von Zuführungslichtleitern doppelten hinzukommenden Anzahl gegenüberliegender Enden. Dabei ist je Ende jeden Zuführungslichtleiters mindestens eine Lichtquelle zugeordnet.

Der Ausdruck, wonach je Ende jeden Zuführungslichtleiters mindestens eine Lichtquelle zugeordnet ist, umfasst im Sinne des vorliegenden Dokuments die zuvor genannte Aussage, wonach jeweils eine Zuführungslichtleiter-Lichteinkoppelfläche je Ende jeden Zuführungslichtleiters zur Einkopplung von von jeweils einer Lichtquelle abgestrahlten Lichts vorgesehen ist.

Ein zweiter Gegenstand der Erfindung betrifft ein Leuchtmittel mit einem Lichtleiter umfassend einen zentralen Auskoppellichtleiter mit wenigstens einer ersten Lichtquelle, der von zwei parallel verlaufenden und versteckt angeordneten und sich jeweils bevorzugt zumindest entlang der gesamten Lichtaustrittsfläche des Auskoppellichtleiters in Richtung dessen Längsausdehnung erstreckenden Zuführungslichtleitern mit jeweils zwei gegenüberliegenden Enden und jeweils einer Lichtquelle je gegenüberliegendes Ende jeden Zuführungslichtleiters flankiert ist.

Der Auskoppellichtleiter kann beispielsweise gegenüberliegend der Lichtaustrittsfläche eine Lichtumlenkfläche zumindest als Teil der Auskoppelstruktur aufweisen, welche das auf sie treffende Licht zur Lichtaustrittsfläche hin unter einem solchen Winkel umlenkt, dass es dort aus dem Werkstoff des Lichtleiters austreten kann.

Vorteile gegenüber dem Stand der Technik sind die Verwirklichung dynamischer Lichtfunktionen mit einem homogenen Erscheinungsbild mit erprobter Technik bei gleichzeitig kompakten Abmessungen einhergehend mit einem geringen Bauraumbedarf und einfachem Aufbau.

Es ist ersichtlich, dass durch entsprechende Ausgestaltung der Lichtumlenkflächen eine segmentweise Ausleuchtung des Auskoppellichtleiters in Abhängigkeit davon erfolgt, in welchem Zuführungslichtleiter Licht von welcher Lichtquelle aus und damit entsprechend von welchem Ende welchen Zuführungslichtleiters her eingekoppelt wird. Die volle Ausleuchtung des Auskoppellichtleiters kann durch die Lichtquelle des Auskoppellichtleiters erhalten werden.

Durch Nutzung der gegenüberliegenden Enden der Zuführungslichtleiter zur Ausleuchtung unterschiedlicher Partien der Lichtaustrittsfläche des Auskoppellichtleiters lässt sich der Bauraumbedarf erheblich einschränken. Darüber hinaus ist der Aufbau wesentlich kompakter und einfacher im Vergleich zu den aus dem Stand der Technik bekannten Lösungen, gemäß denen für die Ausleuchtung jeden Abschnitts ein eigener Lichtleiter oder Zuführungslichtleiter benötigt wird. Die entgegengesetzte Einstrahlung von Licht verschiedener Lichtquellen in die Zuführungslichtleiter kommt außerdem einem verringerten Bauraumbedarf zu Gute, da jeder einen im Vergleich zu einer Lichtquelle höheren Bauraumbedarf aufweisender Zuführungslichtleiter im Vergleich zum Stand der Technik doppelt genutzt wird, nämlich von jedem seiner beiden gegenüberliegenden Enden her.

Ein dritter Gegenstand der Erfindung betrifft eine Fahrzeugleuchte mit einem zuvor beschriebenen Leuchtmittel mit einem davor beschriebenen Lichtleiter.

Die Erfindung kann demnach verwirklicht sein durch eine Fahrzeugleuchte mit zumindest einem zuvor beschriebenen, zur Erfüllung wenigstens einer Lichtfunktion der Fahrzeugleuchte vorgesehenen oder einer vorgegebenen, insbesondere vorgeschriebenen Lichtverteilung der Lichtfunktion beitragenden Leuchtmittel.

Die Fahrzeugleuchte umfasst einen im Wesentlichen von einem Leuchtengehäuse und einer Lichtscheibe umschlossenen Leuchteninnenraum.

Das bei einem von mindestens zwei Zuführungslichtleitern flankierten Auskoppellichtleiter mindestens fünf Lichtquellen umfassende und zur Erfüllung wenigstens einer Lichtfunktion der Fahrzeugleuchte vorgesehene oder einer vorgeschriebenen Lichtverteilung einer solchen Lichtfunktion beitragende Leuchtmittel ist wenigstens zum Teil in dem Leuchteninnenraum beherbergt.

Vorzugsweise sind die Zuführungslichtleiter hinter mindestens einer Blende von außerhalb des Leuchteninnenraums beim Blick durch die Lichtscheibe hindurch nicht sichtbar verborgen angeordnet. Beispielsweise kann jeder Zuführungslichtleiter hinter jeweils einer eigenen Blende verdeckt angeordnet sein.

Der Lichtleiter und/oder das Leuchtmittel können einzelne oder eine Kombination der zuvor und/oder nachfolgend in Verbindung mit der Fahrzeugleuchte beschriebene Merkmale aufweisen, ebenso wie die Fahrzeugleuchte einzelne oder eine Kombination mehrerer zuvor und/oder nachfolgend in Verbindung mit dem Lichtleiter und/oder dem Leuchtmittel beschriebene Merkmale aufweisen und/oder verwirklichen kann.

Der Lichtleiter und/oder das Leuchtmittel und/oder die Fahrzeugleuchte können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Das in den beiden Absätzen zuvor genannte gilt auch für ein nachfolgend noch beschriebenes Verfahren sowie für den Lichtleiter, das Leuchtmittel, die Fahrzeugleuchte und das Verfahren untereinander.

Es ist ersichtlich, dass die Erfindung darüber hinaus verwirklicht sein kann durch ein Verfahren zur dynamischen, segmentweisen Ausleuchtung einer Lichtaustrittsfläche eines Lichtleiters. Der Lichtleiter umfasst einen zentralen Auskoppellichtleiter mit wenigstens einer ersten Lichtquelle, der von zwei parallel verlaufenden und versteckt anordbaren Zuführungslichtleitern mit jeweils zwei gegenüberliegenden Enden und mindestens einer weiteren Lichtquelle je Ende jeden Zuführungslichtleiters flankiert ist.

Der Auskoppellichtleiter weist eine Lichtaustrittsfläche auf, die in beispielsweise fünf individuell ausleuchtbare Partien unterteilt ist, aus denen abhängig vom Betrieb der Lichtquellen an den vier Enden der Zuführungslichtleiter und abhängig vom Betrieb der Lichtquellen des Auskoppellichtleiters Licht austritt.

Die Anzahl der individuell ausleuchtbaren Partien der Lichtaustrittsfläche des Auskoppellichtleiters entspricht mindestens der doppelten Zahl der Zuführungslichtleiter, entsprechend der Anzahl der Enden der Zuführungslichtleiter.

Vorzugsweise entspricht die Anzahl der individuell ausleuchtbaren Partien der Lichtaustrittsfläche des Auskoppellichtleiters der doppelten Zahl der Zuführungslichtleiter zuzüglich eins, entsprechend je einer individuell ausleuchtbaren Partie je Ende jeden Zuführungslichtleiters sowie einer von der mindestens einen Lichtquelle an wenigstens einem Ende des Auskoppellichtleiters individuell ausleuchtbaren Partie.

Wichtig ist in diesem Zusammenhang hervorzuheben, dass eine individuell ausleuchtbare Partie in zwei beispielsweise durch eine oder mehrere dazwischenliegende und durch Einschalten einer oder mehrerer anderer Lichtquellen ausleuchtbare Partien räumlich getrennte Bereiche oder Teilabschnitte unterteilt sein kann. Dies kann beispielsweise in Verbindung mit einer von der Mitte aus ausleuchtbaren Lichtaustrittsfläche vorteilhaft sein, etwa zur Verwirklichung einer in Abhängigkeit etwa von der Stärke der Bremsverzögerung dynamischen Bremslichtfunktion. Mit zunehmender Bremsverzögerung kann hierbei ein zunehmender Teil der Lichtaustrittsfläche ausgeleuchtet werden.

Alternativ oder zusätzlich kann die Anzahl der individuell ausleuchtbaren Partien der Lichtaustrittsfläche des Auskoppellichtleiters der doppelten Zahl der Zuführungslichtleiter zuzüglich eins entsprechen, entsprechend je einer individuell ausleuchtbaren Partie je Ende jeden Zuführungslichtleiters sowie zwei von den Lichtquellen an den gegenüberliegenden Enden des Auskoppellichtleiters individuell ausleuchtbaren Partien.

Die Partien sind hierbei derart dem jeweiligen Ende eines Zuführungslichtleiters zugeordnet, dass von dort eingestrahltes Licht durch entsprechend ausgelegte Lichtumlenkflächen via Lichtüberkopplungsflächen, innerhalb denen Licht der Zuführungslichtleiter jeweils in den Auskoppellichtleiter übergekoppelt wird, nur in der entsprechenden Partie der Lichtaustrittsfläche aus dem Auskoppellichtleiter austritt.

Wichtig ist hervorzuheben, dass denkbar ist, den Auskoppellichtleiter von mehr als zwei Zuführungslichtleitern zu flankieren. Dementsprechend höher kann die Zahl der individuell ausleuchtbaren Partien sein, wobei je Zuführungslichtleiter bis zu zwei zusätzlich individuell ausleuchtbare Partien hinzukommen, bis zu je einer je mit einer individuell ansteuerbaren Lichtquelle versehenem Ende jeden Zuführungslichtleiters.

Ebenfalls wichtig ist hervorzuheben, dass eine oder mehrere Partien jeweils einen geschlossenen Bereich der Lichtaustrittsfläche umfassen können, oder wie zuvor bereits erwähnt alternativ zwei oder mehrere beispielsweise durch eine oder mehrere dazwischenliegende Partien getrennte Bereiche der Lichtaustrittsfläche umfassen können.

Das Verfahren sieht vor, eine Partie des zunächst dunklen Lichtleiters durch Einschalten einer Lichtquelle an einem Ende eines Zuführungslichtleiters oder an einem Ende des Auskoppellichtleiters aufleuchten zu lassen.

Anschließend werden die Lichtquellen an den anderen, verbleibenden Enden der Zuführungslichtleiter nacheinander eingeschaltet beziehungsweise an einem Ende nach dem anderen eines jeden Zuführungslichtleiters nacheinander eingeschaltet. Hierdurch leuchten beispielsweise zunächst eine der Anzahl der mit individuell ansteuerbaren Lichtquellen versehenen Enden der Zuführungslichtleiter entsprechende Zahl von Partien des Auskoppellichtleiters nacheinander auf, entsprechend einer zunehmenden Vergrößerung des lichtabstrahlenden Teils der Lichtaustrittsfläche des Auskoppellichtleiters.

Zum vollständigen Aufleuchten der Lichtaustrittsfläche des Auskoppellichtleiters kann zuletzt die mindestens eine erste Lichtquelle des zentralen Auskoppellichtleiters eingeschaltet werden. Dieser ist zumindest eine verbleibende Partie der Lichtaustrittsfläche des Auskoppellichtleiters zugeordnet. Alternativ kann dieser die vollständige Lichtaustrittsfläche des Auskoppellichtleiters zugeordnet sein. In letzterem Fall kann das Verfahren alternativ vorsehen, dass die Lichtquellen an den Enden der Zuführungslichtleiter mit dem Einschalten der ersten Lichtquelle des zentralen Auskoppellichtleiters abgeschaltet werden.

Wenn an den gegenüberliegenden Enden des Auskoppellichtleiters jeweils unabhängig voneinander einschaltbare Lichtquellen vorgesehen sind, so können durch getrenntes Einschalten der ihr Licht in entgegengesetzten Richtungen in den Auskoppellichtleiter einstrahlenden Lichtquellen entsprechend zusätzlich zu den einer Lichteinkopplung von den Enden der Zuführungslichtleiter her ausleuchtbaren Partien zusätzlich zwei Partien statt nur einer individuell ausgeleuchtet werden.

Wenn mehrere Lichtquellen an einem Ende eines Zuführungslichtleiters oder beispielsweise an einem oder an gegenüberliegenden Enden des zentralen Auskoppellichtleiters vorgesehen sind, können diese hierbei gemeinsam eingeschaltet werden, so als ob es sich hierbei um eine einzige Lichtquelle handelte.

Alternativ oder zusätzlich können jeweils mehrere Lichtquellen an den Enden der Zuführungslichtleiter und/oder an einem oder an gegenüberliegenden Enden des zentralen Auskoppellichtleiters vorgesehen sein, die einzeln, paar- oder gruppenweise Licht verschiedener Grundfarben abstrahlen. Durch segmentweise Einschalten von Lichtquellen jeweils gleicher Grundfarbe oder durch segmentweise Einschalten von Lichtquellen miteinander zu einer für eine Lichtfunktion erforderliche Lichtfarbe kombinierbarer Grundfarben können so alternativ oder zusätzlich zu einer segmentweisen Ausleuchtung der Lichtaustrittsfläche des zentralen Auskoppellichtleiters Lichtfarben für verschiedene Lichtfunktionen bereitgestellt werden, die dann beispielsweise durch unterschiedliche Abfolgen verschiedenartig dynamisch verwirklicht sein können. So kann beispielsweise für eine Wiederholblinklichtfunktion ein Wischen von innen nach außen verwirklicht sein und für eine Bremslichtfunktion eine beiderseitige Ausbreitung ausgehend von der Mitte der Lichtaustrittsfläche.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: eine Vorderansicht eines Lichtleiters mit einem Auskoppellichtleiter mit wenigstens einer ersten Lichtquelle, der von zwei Zuführungslichtleitern mit jeweils zumindest einer weiteren Lichtquelle je Ende jeden Zuführungslichtleiters flankiert ist.
- Fig. 2: eine Vorderansicht eines Lichtleiters mit einem Auskoppellichtleiter mit wenigstens einer ersten Lichtquelle, der von zwei Zuführungslichtleitern mit jeweils zumindest einer weiteren Lichtquelle je Ende jeden Zuführungslichtleiters flankiert ist.
- Fig. 3: einen Querschnitt durch einen Lichtleiter mit einem Auskoppellichtleiter mit wenigstens einer ersten Lichtquelle, der von zwei hinter Blenden versteckt angeordneten Zuführungslichtleitern mit jeweils zumindest einer weiteren Lichtquelle je Ende jeden Zuführungslichtleiters flankiert ist.
- Fig. 4: eine Detailansicht der Partien B1, B2 in Fig. 2 des Auskoppellichtleiters eines Lichtleiters mit einem Auskoppellichtleiter mit wenigstens einer ersten Lichtquelle, der von zwei Zuführungslichtleitern mit jeweils zumindest einer weiteren Lichtquelle je Ende jeden Zuführungslichtleiters flankiert ist, in einem Längsschnitt.
- Fig. 5: eine Zuordnung der Lichtquellen zu den Partien der Lichtaustrittsfläche des Auskoppellichtleiters, aus denen bei Lichtabstrahlung der jeweiligen Lichtquelle Licht austritt, beziehungsweise der dunkel verbleibenden Partien in Tabellenform.
- Fig. 6: ein Ablaufdiagramm eines Verfahrens zur dynamischen, segmentweisen Ausleuchtung einer Lichtaustrittsfläche eines Lichtleiters, welcher einen zentralen Auskoppellichtleiter mit der Lichtaustrittsfläche und mit wenigstens einer ersten Lichtquelle umfasst, der von zumindest zwei parallel verlaufenden und versteckt anordbaren Zuführungslichtleitern mit jeweils mindestens einer weiteren Lichtquelle je Ende jeden Zuführungslichtleiters flankiert ist.

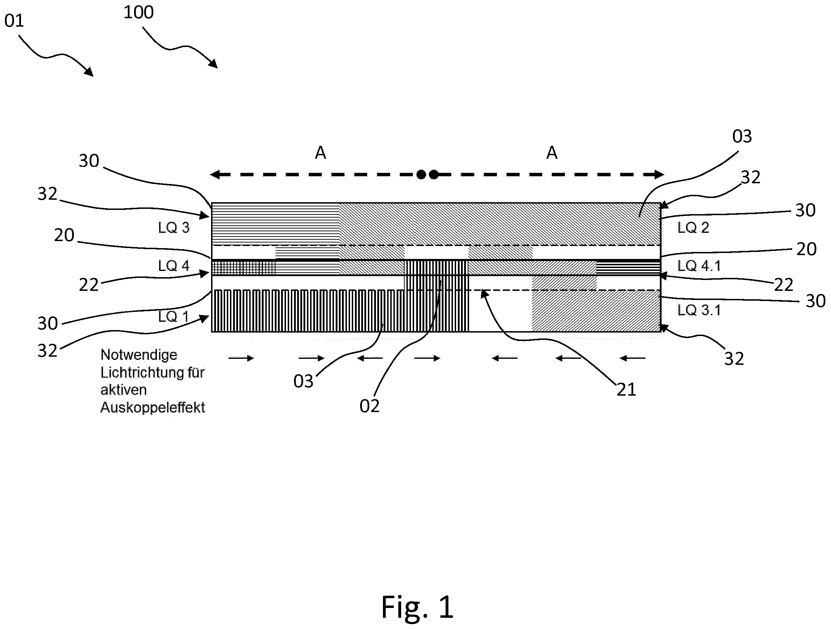

Ein in Fig. 1, Fig. 2, Fig. 3, Fig. 4 ganz oder in Teilen dargestellter Lichtleiter 01 umfasst mindestens einen zentralen Auskoppellichtleiter 02 mit wenigstens einer ersten Lichtquelle LQ 4, LQ 4.1, der von mindestens zwei parallel verlaufenden und versteckt angeordneten beziehungsweise anordbaren Zuführungslichtleitern 03 mit jeweils zwei gegenüberliegende Enden und jeweils zumindest einer weiteren Lichtquelle LQ 1, LQ 2, LQ 3, LQ 3.1 je Ende 30 jeden Zuführungslichtleiters 03 flankiert ist.

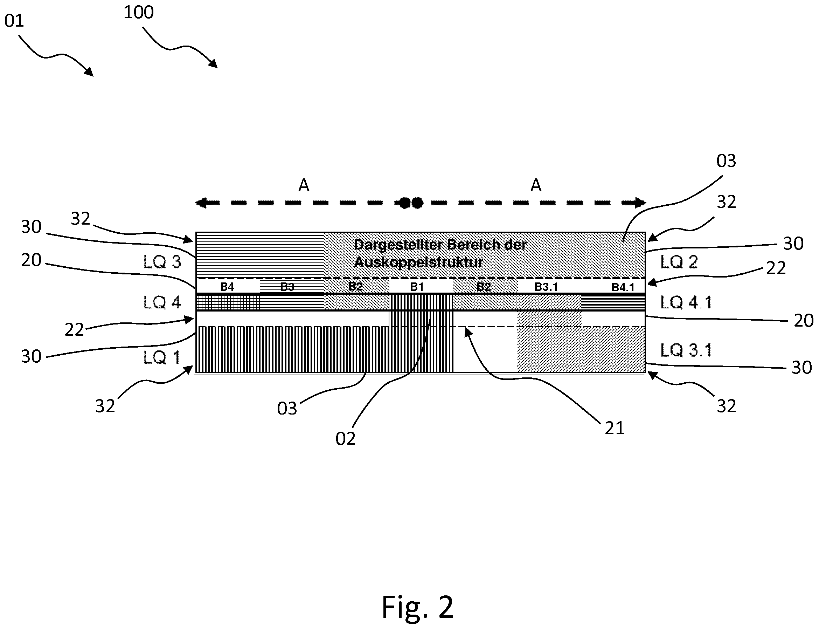

Der zentrale Auskoppellichtleiter 02 umfasst eine sich über zumindest einen Teil dessen Längsausdehnung erstreckende, in Fig. 1 und Fig. 2 durch einen zwischen zwei gestrichelten Linien eingeschlossenen Bereich dargestellte Lichtaustrittsfläche 21 für in ihn eingekoppeltes Licht. Darüber hinaus umfasst der zentrale Auskoppellichtleiter 02 mindestens eine zur Einkopplung von von wenigstens einer ersten Lichtquelle LQ 4, LQ 4.1 abgestrahltes Licht vorgesehene Auskoppellichtleiter-Lichteinkoppelfläche 22.

Die mindestens zwei parallel zum Auskoppellichtleiter 02 verlaufenden, versteckt anordbaren Zuführungslichtleiter 03 umfassen jeweils zwei gegenüberliegende Enden und eine Zuführungslichtleiter-Lichteinkoppelfläche 32 je Ende 30 jeden Zuführungslichtleiters 03 zur Einkopplung von je mindestens einer weiteren Lichtquelle LQ 1, LQ 2, LQ 3, LQ 3.1 abgestrahlten Lichts an jedem ihrer Enden 30, beispielsweise im Falle von zwei Zuführungslichtleitern 03 von einer zweiten, einer dritten, einer vierten und einer fünften Lichtquelle LQ 1, LQ 2, LQ 3, LQ 3.1 abgestrahlten Lichts.

Die Zuführungslichtleiter 03 erstrecken sich parallel zur Längserstreckung des Auskoppellichtleiters 02. Jeder Zuführungslichtleiter 03 flankiert den Auskoppellichtleiter 02 bevorzugt zumindest entlang dessen gesamter Lichtaustrittsfläche 21, beispielsweise entlang dessen gesamter Längserstreckung.

Die Zuführungslichtleiter 03 und der Auskoppellichtleiter 02 sind zumindest an Lichtüberkopplungsflächen, innerhalb denen Licht der Zuführungslichtleiter 03 jeweils in den Auskoppellichtleiter 02 übergekoppelt wird, zumindest optisch wirksam miteinander verbunden.

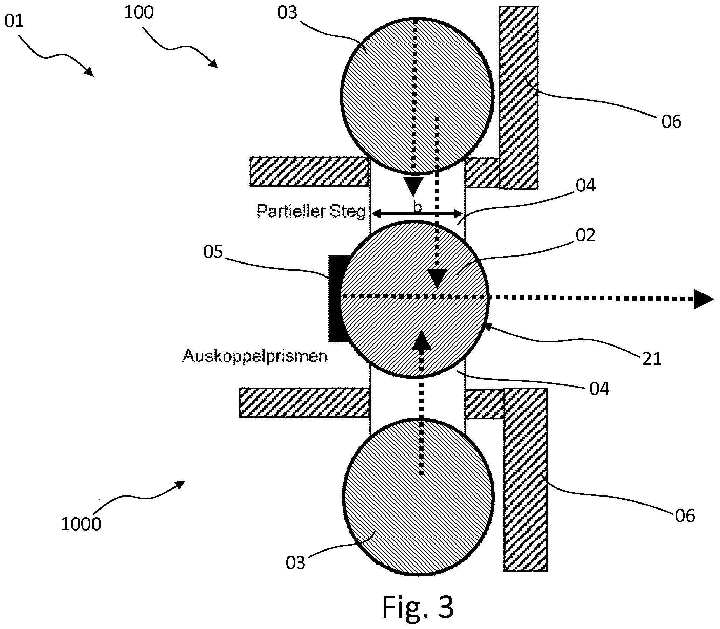

Diese Lichtüberkopplungsflächen können durch Stege 04 gebildet sein oder von diesen umfasst sein, oder Stege 04 umfassen (Fig. 3).

Die Zuführungslichtleiter 03 und/oder der Auskoppellichtleiter 02 weisen eine derart gestaltete Auskoppelstruktur 05 auf, dass eine segmentweise Ausleuchtung der Lichtaustrittsfläche 21 des Auskoppellichtleiters 02 in Abhängigkeit davon erfolgt, in welchem Zuführungslichtleiter 03 Licht von welcher Zuführungslichtleiter-Lichteinkoppelfläche 32 aus eingekoppelt wird.

Eine volle Ausleuchtung der Lichtaustrittsfläche 21 des Auskoppellichtleiters 02 kann durch zumindest zusätzliche Lichteinstrahlung via der Auskoppellichtleiter-Lichteinkoppelfläche 22 erhalten werden.

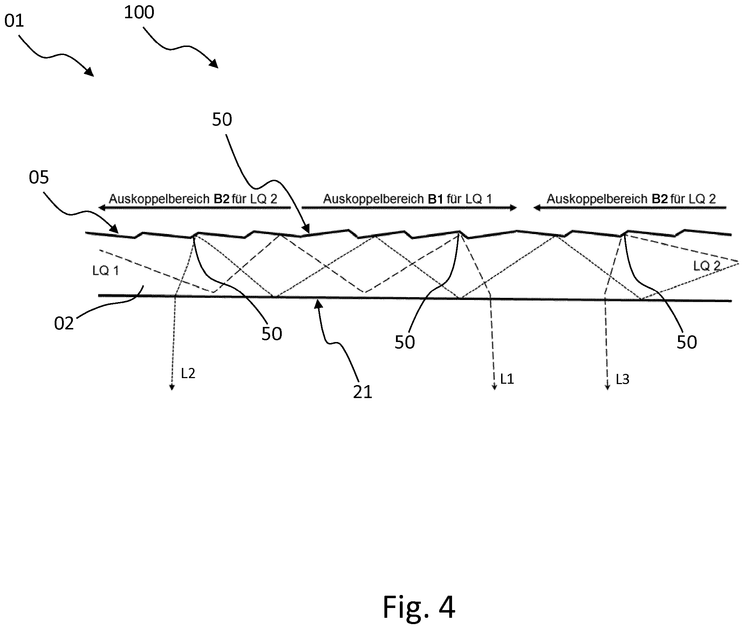

Bevorzugt umfasst der Lichtleiter 01 eine prismenförmige Auskoppelstruktur 50, welche zumindest einen Teil der Auskoppelstruktur 05 bildet. Die prismenförmige Auskoppelstruktur 50 ist so ausgelegt, dass zumindest das in Fig. 4 in seinem Strahlengang durch Pfeile L1, L2, L3 angedeutete, beispielhaft von den Lichtquellen LQ 1, LQ 2 ausgestrahlte, gegenläufige Licht von den Enden 30 der Zuführungslichtleiter 03 ohne aktiven Auskoppeleffekt durch ihn hindurch beziehungsweise zumindest durch den Auskoppellichtleiter 02 hindurch geführt wird, bis es an den zugeordneten Partien B1, B2, B3, B4, B3.1, B4.1 (Fig. 2) der Lichtaustrittsfläche 21 des Auskoppellichtleiters 02 austritt, z.B. L1 durch B1, L2 und L3 durch B2 (Fig. 4).

Dabei stehen die Prismenlängen bevorzugt in einem Verhältnis, dass die Totalreflexionsbedingung vom dichteren zum dünneren Medium immer erfüllt ist und es nicht zum unbeabsichtigten Lichtaustritt in den jeweils einer anderen Lichtquelle zugeordneten Partien kommt.

Es ist ersichtlich, dass die Erfindung demnach durch einen Lichtleiter 01 verwirklicht sein kann, umfassend einen zentralen Auskoppellichtleiter 02, der von mindestens zwei Zuführungslichtleitern 03 flankiert ist, wobei:
- der Auskoppellichtleiter 02 eine sich über zumindest einen Teil dessen Längsausdehnung erstreckende Lichtaustrittsfläche 21 für in ihn eingekoppeltes Licht und mindestens eine zur Einkopplung von von einer ersten Lichtquelle LQ 4, LQ 4.1 abgestrahltes Licht vorgesehene Auskoppellichtleiter-Lichteinkoppelfläche 22 umfasst,
- die Zuführungslichtleiter 03 jeweils eine Zuführungslichtleiter-Lichteinkoppelfläche 32 je gegenüberliegendes Ende 30 eines jeden Zuführungslichtleiters 03 zur Einkopplung von von je mindestens einer weiteren Lichtquelle LQ 1, LQ 2, LQ 3, LQ 3.1 an jedem der gegenüberliegenden Enden 03 abgestrahlten Lichts umfassen,
- die Zuführungslichtleiter 03 und der Auskoppellichtleiter 02 zumindest an Lichtüberkopplungsflächen 04, innerhalb denen Licht der Zuführungslichtleiter 03 jeweils in den Auskoppellichtleiter 02 übergekoppelt wird, zumindest optisch wirksam miteinander verbunden sind,
- die Zuführungslichtleiter 03 und/oder der Auskoppellichtleiter 02 eine derartige Auskoppelstruktur 05 aufweisen, dass eine segmentweise Ausleuchtung der Lichtaustrittsfläche 21 des Auskoppellichtleiters 02 in Abhängigkeit davon erfolgt, in welchen Zuführungslichtleiter 03 Licht von welcher Zuführungslichtleiter-Lichteinkoppelfläche 32 aus eingekoppelt wird, und
- eine volle Ausleuchtung der Lichtaustrittsfläche 21 des Auskoppellichtleiters 02 durch zumindest zusätzliche Lichteinstrahlung via der Auskoppellichtleiter-Lichteinkoppelfläche 22 erhalten wird,
wobei er eine prismenförmige Auskoppelstruktur 05 umfasst, die so ausgelegt ist, dass zumindest das von den gegenüberliegenden Enden der Zuführungslichtleiter her eingekoppelte, gegenläufige Licht ohne aktiven Auskoppeleffekt durch ihn geführt wird.

Hierbei sind die von einem ersten Ende eines Zuführungslichtleiters 03 eingekoppeltem Licht zugeordneten Prismen so ausgestaltet, dass sie das von dem ersten Ende her eingekoppelte Licht innerhalb einer ersten Partie der Lichtaustrittsfläche 21 aus dem Auskoppellichtleiter 02 auskoppeln, wohingegen sie diesem Licht gegenläufiges, von einem dem ersten Ende gegenüberliegenden zweiten Ende her eingekoppeltes Licht nicht in der ersten Partie auskoppeln, sondern in einer von der ersten Partie verschiedenen zweiten Partie der Lichtaustrittsfläche 21.

Der Auskoppellichtleiter 02 weist gegenüberliegend der Lichtaustrittsfläche eine Lichtumlenkfläche mit einer prismenförmigen Auskoppelstruktur 50 zumindest als Teil der Auskoppelstruktur 05 auf, welche das auf sie treffende Licht zur Lichtaustrittsfläche 21 hin unter einem solchen Winkel umlenkt, dass es dort aus dem Werkstoff des Lichtleiters 01 austritt.

Vorzugsweise sind die Zuführungslichtleiter 03 über die Lichtüberkopplungsflächen umfassende Stege 04 mit dem Auskoppellichtleiter 02 verbunden.

Ein in Fig. 1, Fig. 2, Fig. 3, Fig. 4 ganz oder in Teilen dargestelltes Leuchtmittel 100 umfasst zusätzlich zu einem voranstehend beschriebenen Lichtleiter 01 mindestens eine dem zentralen Auskoppellichtleiter 02 zugeordnete erste Lichtquelle LQ 4, LQ 4.1 und mindestens jeweils eine weitere Lichtquelle LQ 1, LQ 2, LQ 3, LQ 3.1 je gegenüberliegendes Ende 30 eines jeden den Auskoppellichtleiter 02 flankierenden Zuführungslichtleiters 03.

Als Lichtquellen LQ 1, LQ 2, LQ 3, LQ 3.1, LQ 4, LQ 4.1 des Leuchtmittels 100 kommen aufgrund ihres hohen Wirkungsgrads bei der Umwandlung von elektrischem Strom in für das menschliche Auge sichtbares Licht, ihrer Verfügbarkeit und ihrer erprobten Verwendbarkeit im Automobilbereich bevorzugt anorganische Leuchtdioden zum Einsatz.

Anorganische Leuchtdioden bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Fahrzeugleuchten bekannt, in denen reine LED-Chips ohne angeformte Primäroptiken zum Einsatz kommen.

Bekannt sind anorganische Leuchtdioden zur Durchsteckmontage (THT; Through Hole Technology), oberflächenmontierbare (SMD; Surface Mounted Device) LEDs und LEDs, bei denen der LED-Chip in Nacktmontagetechnik (COB; Chip On Board) direkt auf den Leuchtmittelträger gebondet wird.

THT-Leuchtdioden, kurz THT-LEDs, sind ein gängig bekannter Typ anorganischer Leuchtdioden. Sie werden auch als bedrahtete Leuchtdioden bezeichnet, da sie aus einer zumindest in einer gewünschten Abstrahlrichtung transparenten Kapselung, z.B. in Form einer Umspritzung oder eines Vergusses bestehen, welche einen den LED-Chip mit einem ersten elektrischen Anschluss, beispielsweise in Form eines Anodenanschlusses verbindenden Bonddraht und den mit einem zweiten elektrischen Anschluss, beispielsweise in Form eines Kathodenanschlusses, verbundenen LED-Chip einschließt. Aus der Kapselung ragen nur die auch als Beinchen bezeichneten Drähte des ersten elektrischen Anschlusses und des zweiten elektrischen Anschlusses als die Anoden- und Kathodenanschlüsse der THT-LED. Der beispielsweise als Kathodenanschluss ausgeführte zweite elektrische Anschluss kann hierbei mit einem oben erwähnten Napf versehen sein, in dem der LED-Chip angeordnet ist. Der Bonddraht führt vom beispielsweise als Anodenanschluss ausgeführten ersten Anschluss von außerhalb des Napfs kommend zum LED-Chip.

SMD-Leuchtdioden, kurz SMD-LEDs, sind ein weiterer bekannter Typ anorganischer Leuchtdioden. SMD-LEDs bestehen aus einem Leadframe mit wenigstens einer Bestückungsfläche für mindestens einen LED-Chip sowie elektrischen Anschlussflächen. Das Leadframe ist von einem Kunststoffkörper mit zumindest einer die wenigstens eine Bestückungsfläche freihaltenden Ausnehmung teilweise umspritzt. Die elektrischen Anschlussflächen des Leadframes sind hierbei als die elektrischen Anschlüsse der SMD-LED zur späteren Oberflächenmontage ebenfalls freigehalten. Der mindestens eine LED-Chip ist am Grund der zumindest einen zur wenigstens einen Bestückungsfläche reichenden Ausnehmung angeordnet und elektrisch kontaktiert. Dabei ist der LED-Chip auf einer mit wenigstens einer ersten elektrischen Anschlussfläche verbundenen ersten Partie des Leadframes angeordnet. Ein Bonddraht verbindet den LED-Chip mit einer zweiten Partie des Leadframes, die wiederum mit wenigstens einer zweiten elektrischen Anschlussfläche verbunden ist. Die an ihrem Grund zur Bestückungsfläche reichende Ausnehmung kann reflektorartig ausgestaltet sein. Dabei bilden die Wandungen der Ausnehmung den oben erwähnten Primärreflektor. Hierbei können die Wandungen reflektierend beschichtet sein.

COB-Leuchtdioden, kurz COB-LEDs, bestehen aus einem direkt auf einem Leuchtmittelträger anzuordnenden, ungehäusten LED-Chip und einem Bonddraht. Die Rückseite des LED-Chips bildet dabei den ersten elektrischen Anschluss der COB-LED. Zur elektrischen Kontaktierung wird der LED-Chip auf seiner Rückseite direkt mit einer ersten Leiterbahn eines Leuchtmittelträgers z.B. durch Löten oder Schweißen elektrisch verbunden. Der den zweiten elektrischen Anschluss der COB-LED bildende Bonddraht wird mit einer zweiten Leiterbahn des Leuchtmittelträgers ebenfalls z.B. durch Löten oder Schweißen elektrisch verbunden.

Der Vollständigkeit halber sei ergänzend erwähnt, dass auch andere Kontaktierungen wie z.B. der so genannte Flip-Chip-Aufbau möglich sind, bei dem die Kontaktmittel des LED-Chips direkt mit einem kontaktierten Substrat verbunden sind. In diesen Fällen wird kein Bonddraht verwendet.

Der Einfachheit halber wird im Folgenden nicht mehr zwischen anorganischer Leuchtdiode und LED-Chip unterschieden und statt dessen einheitlich der Begriff LED stellvertretend für beides verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Mit anderen Worten weisen LEDs bei gleicher Lichtstärke einen im Vergleich zu anderen Lichtquellen geringeren Stromverbrauch auf. Hierdurch kann bei einer Verwendung einer oder mehrerer LEDS als Lichtquelle eines Leuchtmittels beispielsweise in einer Fahrzeugleuchte die Belastung eines zur Stromversorgung vorgesehenen Bordnetzes eines Fahrzeugs verringert werden, einhergehend mit Einsparungen beim Energieverbrauch des Fahrzeugs. Ferner weisen LEDs eine weit höhere Lebensdauer auf, als andere, zur Anwendung in einer Fahrzeugleuchte in Frage kommende Lichtquellen. Durch die längere Lebensdauer wird unter Anderem durch die geringere Ausfallquote die Betriebssicherheit und damit einhergehend die Qualität der Fahrzeugleuchte erhöht.

Als Lichtquellen LQ 1, LQ 2, LQ 3, LQ 3.1, LQ 4, LQ 4.1 des Leuchtmittels 100 vorgesehene LEDs können ganz oder teilweise vom Werkstoff des Lichtleiters 01 umspritzt sein. Die Auskoppellichtleiter- und/oder Zuführungslichtleiter-Lichteinkoppelflächen 22, 32 werden hierbei durch die direkt an die LEDs angrenzenden Bereiche des Lichtleiters 01 gebildet, in die die LEDs das von ihnen abgestrahlte Licht einstrahlen.

Zum Betrieb von LEDs als Lichtquellen LQ 1, LQ 2, LQ 3, LQ 3.1, LQ 4, LQ 4.1 des beispielsweise zur Erfüllung einer Lichtfunktion einer Fahrzeugleuchte 1000 vorgesehenen Leuchtmittels 100 können eine oder mehrere mehr oder minder komplexe elektronische Steuerschaltungen vorgesehen sein, die beispielsweise auf einem oder mehreren Leuchtmittelträgern des Leuchtmittels 100 angeordnet und beispielsweise in einem Leuchteninnenraum der Fahrzeugleuchte 1000 beherbergt sein können.

Ein einfaches Beispiel für eine elektronische Steuerschaltung betrifft die Angleichung unterschiedlicher Helligkeiten einzelner LEDs oder von LED-Strängen innerhalb einer Gruppe gemeinsam betriebener, auf einem oder mehreren Leuchtmittelträgern angeordneter LEDs. Eine solche elektronische Steuerschaltung besteht aus mindestens einem oder mehreren Vorwiderständen zur Anpassung der Vorwärtsspannung der LEDs an das Bordnetz eines Fahrzeugs. Beispielsweise ist bekannt, die LEDs im so genannten Binning nach Vorwärtsspannung und Intensität zu sortieren. Um Unterschiede zwischen mehreren LED-Strängen auszugleichen, die jeweils aus in Reihe geschalteten LEDs gleicher Vorwärtsspannung und Intensität bestehen, und um eine homogene Helligkeitsverteilung der benachbarten LED-Stränge aus LEDs mit unterschiedlicher Vorwärtsspannung und Intensität zu erhalten, wird zumindest jeder LED-Strang mit einem anderen Vorwiderstand versehen.

LEDs bedürfen darüber hinaus beim Einsatz als Lichtquelle LQ 1, LQ 2, LQ 3, LQ 3.1, LQ 4, LQ 4.1 von insbesondere in Fahrzeugleuchten 1000 eingesetzten Leuchtmitteln 100 oft einer separaten Ausfallerkennung. Dies ist bedingt durch die geringe Leistungsaufnahme von LEDs im Allgemeinen. Beispielsweise ist ein in einem Fahrzeug untergebrachtes Steuergerät nicht in der Lage, eine dem Ausfall einer oder weniger LEDs entsprechende Änderung der Leistungsentnahme aus dem Bordnetz zu erkennen, da eine hieraus resultierende Bordnetzspannungsänderung unterhalb der im normalen Betrieb eines Fahrzeugs auftretenden Bordnetzspannungsschwankungen liegt. Eine beispielsweise in der Fahrzeugleuchte 1000 untergebrachte elektronische Schaltungsanordnung zur Ausfallerkennung erfasst den Ausfall einer oder mehrerer LEDs in der Fahrzeugleuchte 1000 beispielsweise mittels eines oder mehrerer Komparatoren und teilt dies dem Steuergerät mit. Diese elektronische Schaltungsanordnung zur Ausfallerkennung kann durch eine beispielsweise auf dem Leuchtmittelträger aufgebrachte elektronische Steuerschaltung verwirklicht sein.

Darüber hinaus können LEDs weiterer elektronischer Steuerschaltungen bedürfen. Beispiele hierfür sind elektronische Steuerschaltungen:
- zur Regelung und/oder Steuerung der Helligkeit bzw. Leuchtkraft der LEDs, beispielsweise durch eine pulsweitenmodulierte Taktung der Stromversorgung für einen außerhalb des für das menschliche Auge wahrnehmbaren Bereichs gepulsten Betrieb,
- zur Kompensation oder Vermeidung elektromagnetischer Störungen, beispielsweise aufgebaut aus Kondensatoren und/oder Ferriten,
- zum Schutz der LEDs beispielsweise vor einer Überspannung des Bordnetzes oder vor fehlerhafter Polung, beispielsweise umfassend eine oder mehrere Zenerdioden.

Zusammengefasst muss für fast alle LED-Anwendungen eine mehr oder minder umfangreiche, für die speziellen LEDs ausgelegte elektronische Steuerschaltung z.B. auf den mindestens einen Leuchtmittelträger aufgebracht werden. Die elektronische Steuerschaltung umfasst im einfachsten Fall einen Vorwiderstand und eine Schutzdiode, kann aber je nach Anwendung auch wesentlich mehr Elektronikbauteile enthalten, wie beispielsweise Mikrokontroller bzw. Kontroller, Komparatoren, Transistoren, Schutzdioden, elektrische Widerstände z.B. als Vorwiderstand, Kondensatoren, Ferrite, etc.

Somit kann ein Leuchtmittel 100 mit einer oder mehreren LEDs als Lichtquelle LQ 1, LQ 2, LQ 3, LQ 3.1, LQ 4, LQ 4.1 zusätzlich zu einer oder mehreren aufgrund ihres Diodenaufbaus Elektronikbauteile darstellenden LEDs zumindest ein weiteres zuvor genanntes Elektronikbauteil umfassen. Demnach kann ein Leuchtmittel 100 mit einer oder mehreren LEDs als Lichtquellen LQ 1, LQ 2, LQ 3, LQ 3.1, LQ 4, LQ 4.1 neben der LEDs LQ 1, LQ 2, LQ 3, LQ 3.1, LQ 4, LQ 4.1 zumindest noch über ein weiteres Elektronikbauteil verfügen.

Die Lichtquellen LQ 1, LQ 2, LQ 3, LQ 3.1, LQ 4, LQ 4.1 des Leuchtmittels 100 und wenigstens ein weiteres Elektronikbauteil können auf einem gemeinsamen, einen Leiterbahnträger darstellenden Leuchtmittelträger, oder auf räumlich getrennten, untereinander beispielsweise durch einen Kabelbaum oder einen oder mehrere Teile eines Kabelbaums elektrisch verbundenen Leiterbahnträgern, von denen wenigstens einer den Leuchtmittelträger bildet, angeordnet sein.

Bei den in Verbindung mit einem Leuchtmittelträger zum Einsatz kommenden Leiterbahnträgern handelt es sich um Leiterbahnträger, wie sie auch zur elektrischen Verschaltung von Elektronikbauteilen beispielsweise zur Ansteuerung von anderen Lichtquellen als LEDs, verwendet werden.

Leiterbahnträger können beispielsweise als so genannte Leiterplatten starr, oder als so genannte, auch als Leiterbahnflexfolien bezeichnete Flexplatinen biegsam, beispielsweise elastisch oder biegeschlaff verformbar ausgeführt sein. Daneben sind in MID-Technik (MID-Technik: Molded-Interconnect-Device-Technik) hergestellte spritzgegossene Schaltungsträger bekannt, welche in Gestalt eines Bauteils beispielsweise einer Fahrzeugleuchte 1000 mit integrierten Leiterbahnen in Spritzgusstechnik hergestellt werden und neben ihrer Funktion zur elektrischen Kontaktierung beispielsweise von Elektronikbauteilen und/oder Lichtquellen LQ 1, LQ 2, LQ 3, LQ 3.1, LQ 4, LQ 4.1 gleichzeitig eine mechanische Funktion der Fahrzeugleuchte 1000 übernehmen, beispielsweise eine Anordnung von Lichtquellen LQ 1, LQ 2, LQ 3, LQ 3.1, LQ 4, LQ 4.1 entlang einer vorgegebenen Geometrie unter gleichzeitiger Ausbildung eines Reflektors.

Das Leuchtmittel 100 besteht demnach zumindest aus einem Lichtleiter 01 umfassend einen zentralen Auskoppellichtleiter 02 mit wenigstens einer ersten Lichtquelle LQ 4, LQ 4.1, der von zwei parallel verlaufenden und versteckt angeordneten Zuführungslichtleitern 03 mit jeweils einer Lichtquelle LQ 1, LQ 2, LQ 3, LQ 3.1 je Ende 30 jeden Zuführungslichtleiters 03 flankiert ist.

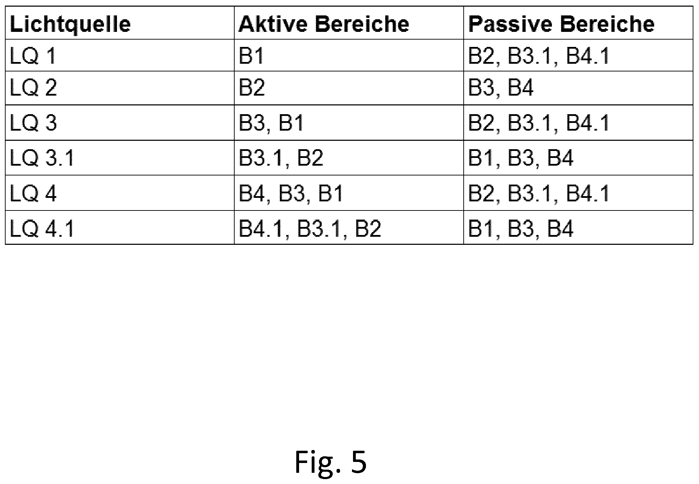

Eine beispielhafte Zuordnung der Lichtquellen LQ 1, LQ 2, LQ 3, LQ 3.1, LQ 4, LQ 4.1 zu den auch als aktive Bereiche bezeichneten Partien B1, B2, B3, B3.1, B4, B4.1 der Lichtaustrittsfläche 21 des Auskoppellichtleiters 02 des Auskoppellichtleiters 02 des Lichtleiters 01 in Fig. 2, aus denen bei Lichtabstrahlung der jeweiligen Lichtquelle LQ 1, LQ 2, LQ 3, LQ 3.1, LQ 4, LQ 4.1 Licht austritt, beziehungsweise der dunkel verbleibenden, auch als passive Bereiche bezeichneten Partien B1, B2, B3, B3.1, B4, B4.1 der Lichtaustrittsfläche 21, ist der Tabelle in Fig. 5 zu entnehmen.

Bevorzugt sind die erste Lichtquelle LQ 4, LQ 4.1 und jede der weiteren Lichtquellen LQ 1, LQ 2, LQ 3, LQ 3.1 je Ende 30 jeden Zuführungslichtleiters 03 unabhängig voneinander ansteuerbar.

Dadurch kann das von den einzelnen Lichtquellen LQ 1, LQ 2, LQ 3, LQ 3.1, LQ 4, LQ 4.1 abgestrahlte Licht unabhängig voneinander in den Lichtleiter 01 eingekoppelt werden.

Hierdurch kann Licht von der ersten Lichtquelle LQ 4, LQ 4.1 und von jedem Ende 30 jeden Zuführungslichtleiters 03 her unabhängig von den verbleibenden ersten und weiteren Lichtquellen LQ 1, LQ 2, LQ 3, LQ 3.1, LQ 4, LQ 4.1 in den Lichtleiter 01 eingekoppelt werden.

Grundsätzlich können an den Enden 30 der Zuführungslichtleiter 03 und/oder an einem oder an gegenüberliegenden Enden 20 des zentralen Auskoppellichtleiters 02 jeweils mehrere einzeln, paar- oder gruppenweise ansteuerbare Lichtquellen LQ 1, LQ 2, LQ 3, LQ 3.1, LQ 4, LQ 4.1 vorgesehen sein, die einzeln, paar- oder gruppenweise Licht verschiedener Grundfarben abstrahlen können.

Durch segmentweise Einschalten von Lichtquellen jeweils gleicher Grundfarbe oder durch segmentweise Einschalten von Lichtquellen miteinander zu einer für eine Lichtfunktion erforderliche Lichtfarbe kombinierbarer Grundfarben können so alternativ oder zusätzlich zu einer segmentweisen Ausleuchtung der Lichtaustrittsfläche 21 des zentralen Auskoppellichtleiters 02 Lichtfarben für verschiedene Lichtfunktionen bereitgestellt werden, die dann beispielsweise durch unterschiedliche Abfolgen verschiedenartig dynamisch verwirklicht sein können. So kann beispielsweise für eine Wiederholblinklichtfunktion ein Wischen von innen nach außen verwirklicht sein, oder wie in Fig. 1 und Fig. 2 durch eine Animierrichtung entsprechend einer Ausbreitung des beleuchteten Teils der Lichtaustrittsfläche 21 des Auskoppellichtleiters 02 durch nacheinander beleuchtete Partien B1, B2, B3, B3.1, B4, B4.1 andeutende Pfeile A dargestellt für eine Bremslichtfunktion eine beiderseitige Ausbreitung ausgehend von der Mitte der Lichtaustrittsfläche 21.

Vorteile gegenüber dem Stand der Technik sind die Verwirklichung dynamischer Lichtfunktionen mit einem homogenen Erscheinungsbild mit erprobter Technik bei gleichzeitig verringertem Bauraumbedarf einhergehend mit kompakten Abmessungen und einfachem Aufbau.

Es ist ersichtlich, dass durch entsprechende Ausgestaltung der Auskoppelstruktur 05 eine segmentweise Ausleuchtung des Auskoppellichtleiters 02 zumindest in Abhängigkeit davon erfolgt, von welchem Ende 30 welchen Zuführungslichtleiters 03 her Licht eingekoppelt wird. Die volle Ausleuchtung des Auskoppellichtleiters 02 kann durch die mindestens eine erste Lichtquelle LQ 4, LQ 4.1 des Auskoppellichtleiters 02 erhalten werden beziehungsweise durch Lichteinkopplung via der mindestens einen Auskoppellichtleiter-Lichteinkoppelfläche 22.

Das zuvor beschriebene Leuchtmittel 100 kann wie bereits zuvor angedeutet Teil einer zumindest in Fig. 3 ganz oder in Teilen dargestellten Fahrzeugleuchte 1000 sein.

Eine solche Fahrzeugleuchte 1000 mit zumindest einem zur Erfüllung wenigstens einer Lichtfunktion der Fahrzeugleuchte 1000 vorgesehenen oder einer vorgegebenen, insbesondere vorgeschriebenen Lichtverteilung der Lichtfunktion beitragenden Leuchtmittel 100 umfasst einen wenigstens zum Teil von einem Leuchtengehäuse und einer Lichtscheibe umschlossenen Leuchteninnenraum, welcher das beispielsweise mindestens fünf Lichtquellen LQ 1, LQ 2, LQ 3, LQ 3.1, LQ 4, LQ 4.1 umfassende und zur Erfüllung wenigstens einer Lichtfunktion der Fahrzeugleuchte 1000 vorgesehene oder einer vorgeschriebenen Lichtverteilung einer solchen Lichtfunktion beitragende Leuchtmittel 100 wenigstens zum Teil beherbergt.

Die Erfindung kann demnach verwirklicht sein durch eine Fahrzeugleuchte 1000 mit zumindest einem zuvor beschriebenen, zur Erfüllung wenigstens einer Lichtfunktion der Fahrzeugleuchte 1000 vorgesehenen oder einer vorgegebenen, insbesondere vorgeschriebenen Lichtverteilung der Lichtfunktion beitragenden Leuchtmittels 100.

Vorzugsweise sind die Zuführungslichtleiter 03 von außerhalb des Leuchteninnenraums beim Blick durch die Lichtscheibe hindurch nicht sichtbar angeordnet. Vorzugsweise nur die Lichtaustrittsfläche 21 des zentralen Auskoppellichtleiters 02 ist beim Blick von außerhalb des Leuchteninnenraums durch die Lichtscheibe hindurch sichtbar.

Die Zuführungslichtleiter 03 können hierzu hinter mindestens einer Blende 06 verborgen angeordnet sein. Beispielsweise kann jeder Zuführungslichtleiter 03 hinter jeweils einer eigenen Blende 06 verdeckt angeordnet sein.

Die Fahrzeugleuchte 1000 kann Steuerungsmittel zur einzeln, paar- oder gruppenweise Ansteuerung der Lichtquellen LQ 1, LQ 2, LQ 3, LQ 3.1, LQ 4, LQ 4.1 des Leuchtmittels 100 zur segmentweise dynamischen Ausleuchtung der Lichtaustrittsfläche 21 des Lichtleiters 01 umfassen.

Es ist ersichtlich, dass ein der Erfindung zugrunde liegender Gedanke in einem Auskoppellichtleiter 02, zu dem parallel weitere Zuführungslichtleiter 03 geführt sind, zu sehen ist.

Die Zuführungslichtleiter 03 sind über einen Steg 04 partiell an den Auskoppellichtleiter 02 angebunden. Die Lichteinspeisung erfolgt sequentiell am Zuführungslichtleiter 03 und am Auskoppellichtleiter 02. Der Auskoppellichtleiter 02 wird dabei nur partiell am zu beleuchtenden Segment beziehungsweise an der zu beleuchtenden Partie B1, B2, B3, B3.1, B4, B4.1 angebunden und von den Zuführungslichtleitern 03 gespeist. Die Zuführungslichtleiter 03 sind hinter einer Blende 06 geführt. Durch beidseitige Einspeisung an den Enden 30 der Zuführungslichtleiter 03 und direkte Einspeisung an einem oder an beiden Enden 20 am Auskoppellichtleiter 02 können die animierbaren Segmente beziehungsweise Partien B1, B2, B3, B3.1, B4, B4.1 erhöht werden.

Neben der segmentweisen Zuführung des Lichts ist die lichtrichtungsabhängige Auskoppelstruktur 05 zumindest des Auskoppellichtleiters 02 ausschlaggebend um die maximale Anzahl von auch als Bereiche bezeichneten Partien B1, B2, B3, B3.1, B4, B4.1 verwirklichen zu können.

Fig. 1 zeigt hierbei zur Veranschaulichung des Prinzips eine Frontalansicht eines Ausführungsbeispiels in Form eines animierbaren Leuchtenbands mit partieller Lichtzuführung durch sequentielles hinzuschalten der Lichtquellen LQ 1, LQ 2, LQ3 und LQ3.1 sowie LQ 4 und LQ 4.1.

Fig. 4 zeigt ebenfalls als eine Prinzipdarstellung eine Teilansicht eines horizontalen Schnitts durch die Bereiche B1 und B2 des Auskoppellichtleiters 02 in Fig. 2 eines Ausführungsbeispiels in Form eines animierbaren Leuchtenbands.

Die prismenförmige Auskoppelstruktur 05 ist dabei so ausgelegt, dass das gegenläufige Licht ohne aktiven Auskoppeleffekt durch den Auskoppellichtleiter 02 geführt werden kann (z.B. L1 durch B2, L2 durch B1). Die Prismenlängen stehen dabei in einem Verhältnis, dass die Totalreflexionsbedingung vom dichteren zum dünneren Medium immer erfüllt ist und es nicht zum Lichtaustritt kommt.

Unterschiedliche Helligkeiten der aktive Bereiche bildenden Partien B1, B2, B3, B3.1, B4, B4.1, die durch Überlagerung von mehreren Lichtquellen LQ 1, LQ 2, LQ 3, LQ 3.1, LQ 4, LQ 4.1 entstehen, können durch dynamisches Dimmen der betreffenden Lichtquellen LQ 1, LQ 2, LQ 3, LQ 3.1, LQ 4, LQ 4.1 ausgeglichen oder als Bewusste Inszenierung eingesetzt werden.

Vorteile gegenüber dem Stand der Technik sind eine animierbare Leuchtenfunktionen, die durch das Lichtleiterkonzept flächig homogen und durch minimalen Platinen und Lichtquellenaufwand weiterhin kostengünstig und bauraumsparend umsetzbar ist. Der erfinderische Schritt liegt in der Kombination von der segmentweisen Zuführung in Abhängigkeit von der Zeit, und der richtungsabhängigen Auskoppelstruktur 05 zumindest des Auskoppellichtleiters 02.

Die Erfindung kann darüber hinaus durch ein Verfahren zur dynamischen, segmentweisen Ausleuchtung einer Lichtaustrittsfläche 21 eines Lichtleiters 01 verwirklicht sein, welcher Lichtleiter 01 einen zentralen Auskoppellichtleiter 02 mit der Lichtaustrittsfläche 21 und mit wenigstens einer ersten Lichtquelle LQ 4, LQ 4.1 umfasst, der von zumindest zwei parallel verlaufenden und versteckt anordbaren Zuführungslichtleitern 03 mit jeweils mindestens einer weiteren Lichtquelle LQ 1, LQ 2, LQ 3, LQ 3.1 je gegenüberliegendes Ende 30 eines jeden Zuführungslichtleiters 03 flankiert ist.

Der Auskoppellichtleiter 02 weist die Lichtaustrittsfläche 21 auf. Die Lichtaustrittsfläche 21 ist in eine Anzahl individuell ausleuchtbarer Partien B1, B2, B3, B3.1, B4, B4.1 unterteilt, die beispielsweise der doppelten Zahl von Zuführungslichtleitern 03 zuzüglich eins oder zwei für den Auskoppellichtleiter 02 entspricht.

Aus den Partien B1, B2, B3, B3.1, B4, B4.1 tritt abhängig vom Betrieb der Lichtquellen LQ 1, LQ 2, LQ 3, LQ 3.1 an den Enden 30 der Zuführungslichtleiter 03 und abhängig vom Betrieb der einen oder mehreren Lichtquellen LQ 4, LQ 4.1 des Auskoppellichtleiters 02 jeweils Licht aus.

Die doppelte Zahl von Zuführungslichtleitern 03 spiegelt hierbei die an den Enden 30 der Zuführungslichtleiter angeordneten, unabhängig voneinander betriebenen oder betreibbaren Lichtquellen LQ 1, LQ 2, LQ 3, LQ 3.1 je Ende 30 jeden Zuführungslichtleiters 03 wieder. Werden an verschiedenen Enden 30 der Zuführungslichtleiter 03 angeordnete Lichtquellen LQ 3, LQ 3.1 gemeinsam betrieben, so können die diesen Lichtquellen LQ 3, LQ 3.1 zugeordneten Partien B3, B3.1 als ein gemeinsamer Bereich betrachtet werden.

Die Zahl eins gilt hierbei in Fällen, in denen der Auskoppellichtleiter 02 beispielsweise an nur einem Ende 20 eine Lichtquelle LQ 4 oder LQ 4.1 aufweist, oder die Lichtquellen LQ 4, LQ 4.1 an seinen gegenüberliegenden Enden 20 nur gemeinsam und nicht unabhängig voneinander betrieben werden.

Die Zahl zwei gilt hingegen in denjenigen Fällen, in denen der Auskoppellichtleiter 02 an seinen beiden Enden 20 jeweils mindestens eine Lichtquelle LQ 4 oder LQ 4.1 aufweist, die unabhängig voneinander betrieben werden.

Wichtig ist in diesem Zusammenhang hervorzuheben, dass beim in Fig. 1, Fig. 2 gezeigten Lichtleiter 01 die Lichtquellen LQ 4, LQ 4.1 an den gegenüberliegenden Enden 20 des Auskoppellichtleiters 02 gemeinsam und nicht unabhängig voneinander betrieben werden. Hierdurch bilden die von den Lichtquellen LQ 4, LQ 4.1 des Auskoppellichtleiters 02 ausleuchtbaren Partien B4, B4.1 aufgrund des gemeinsamen Ein- und Ausschaltens der Lichtquellen LQ 4, LQ 4.1 des Auskoppellichtleiters 02 einen gemeinsam ausleuchtbaren Bereich.

Der Auskoppellichtleiter 02 eines in Fig. 1, Fig. 2 dargestellten Lichtleiters 01, der mit zwei Zuführungslichtleitern 03 ausgestattet ist, weist demnach eine Lichtaustrittsfläche 21 auf, die in fünf individuell ausleuchtbare Partien B1, B2, B3, B3.1, B4, B4.1 unterteilt ist, aus denen abhängig vom Betrieb der Lichtquellen LQ 1, LQ 2, LQ 3, LQ 3.1 an den vier Enden 30 der Zuführungslichtleiter 03 und abhängig vom Betrieb der Lichtquellen LQ 4, LQ 4.1 des Auskoppellichtleiters 02 Licht austritt.

Dabei bilden die Partien B3 und B3.1, ebenso wie die Partien B4, B4.1 jeweils gemeinsam ausleuchtbare Bereiche.

Die Partien B1, B2, B3, B3.1 sind hierbei derart dem jeweiligen Ende 30 eines Zuführungslichtleiters 03 zugeordnet, dass von dort eingestrahltes Licht durch entsprechend ausgelegte Lichtumlenkflächen via Lichtüberkopplungsflächen, innerhalb denen Licht der Zuführungslichtleiter 03 jeweils in den Auskoppellichtleiter 02 übergekoppelt wird, nur in der entsprechenden Partie B1, B2, B3, B3.1 der Lichtaustrittsfläche 21 aus dem Auskoppellichtleiter 02 austritt.

Wichtig ist hervorzuheben, dass denkbar ist, den Auskoppellichtleiter 02 von mehr als zwei Zuführungslichtleitern 03 zu flankieren. Dementsprechend höher kann die Zahl der individuell ausleuchtbaren Partien B1, B2, B3, B3.1, B4, B4.1 sein, wobei je Zuführungslichtleiter 03 bis zu zwei zusätzlich individuell ausleuchtbare Partien B1, B2, B3, B3.1 hinzukommen, bis zu je einer je mit einer individuell ansteuerbaren Lichtquelle LQ 1, LQ 2, LQ 3, LQ 3.1 versehenem Ende 30 jeden Zuführungslichtleiters 03.

Ebenfalls wichtig ist hervorzuheben, dass eine oder mehrere Partien B1, B2, B3, B3.1, B4, B4.1 jeweils einen geschlossenen Bereich der Lichtaustrittsfläche 21 umfassen können, oder alternativ zwei oder mehrere beispielsweise durch eine oder mehrere dazwischenliegende Partien B1, B2, B3, B3.1, B4, B4.1 getrennte Bereiche der Lichtaustrittsfläche 21 umfassen können.

Das Verfahren sieht am Beispiel des in Fig. 1, Fig. 2, Fig. 3, Fig. 4 dargestellten Leuchtmittels 100 vor, eine Partie B1 des zunächst dunklen Lichtleiters 01 durch Einschalten einer Lichtquelle LQ 1 an einem der gegenüberliegenden Enden 30 eines Zuführungslichtleiters 03 aufleuchten zu lassen.

Anschließend werden die Lichtquellen LQ 2, LQ 3, LQ 3.1 an den verbleibenden Enden 30 der Zuführungslichtleiter 03 nacheinander eingeschaltet. Hierbei werden die Lichtquellen an einem Ende nach dem anderen eingeschaltet. Dabei ist es unerheblich, ob zunächst die eine oder mehrere Lichtquellen am gegenüberliegenden Ende des selben Zuführungslichtleiters 03, oder die eine oder mehrere Lichtquellen an einem der gegenüberliegenden Enden eines anderen Zuführungslichtleiters 03 eingeschaltet werden. Die Abfolge kann hierbei an die konstruktiven Gegebenheiten, beispielsweise an die konstruktiv und/oder lichttechnisch einfachste Umsetzungsmöglichkeit der Auskoppelstruktur 05 angepasst werden.

Durch das nacheinander Einschalten leuchten zunächst eine der Anzahl der mit individuell ansteuerbaren Lichtquellen LQ1, LQ 2, LQ 3, LQ 3.1 versehenen Enden 30 der Zuführungslichtleiter 03 entsprechende Zahl von Partien B1, B2, B3, B3.1 der Leuchtfläche 21 des Auskoppellichtleiters 02 nacheinander auf, entsprechend einer zunehmenden Vergrößerung des lichtabstrahlenden Teils der Lichtaustrittsfläche 21 des Auskoppellichtleiters 02.

Zum vollständigen Aufleuchten der Lichtaustrittsfläche 21 des Auskoppellichtleiters 02 wird zuletzt die mindestens eine erste Lichtquelle LQ 4, LQ 4.1 des zentralen Auskoppellichtleiters 02 eingeschaltet. Dieser ist zumindest eine verbleibende Partie B4, B4.1 der Lichtaustrittsfläche 21 des Auskoppellichtleiters 02 zugeordnet. Alternativ kann dieser die vollständige Lichtaustrittsfläche 21 des Auskoppellichtleiters 02 zugeordnet sein. In letzterem Fall kann das Verfahren alternativ vorsehen, dass die Lichtquellen LQ1, LQ 2, LQ 3, LQ 3.1 an den Enden 30 der Zuführungslichtleiter 03 mit dem Einschalten der ersten Lichtquelle LQ 4, LQ 4.1 des zentralen Auskoppellichtleiters 02 abgeschaltet werden.

Das Verfahren kann am Ende vorsehen, alle Lichtquellen LQ1, LQ 2, LQ 3, LQ 3.1, LQ 4, LQ 4.1 abzuschalten.

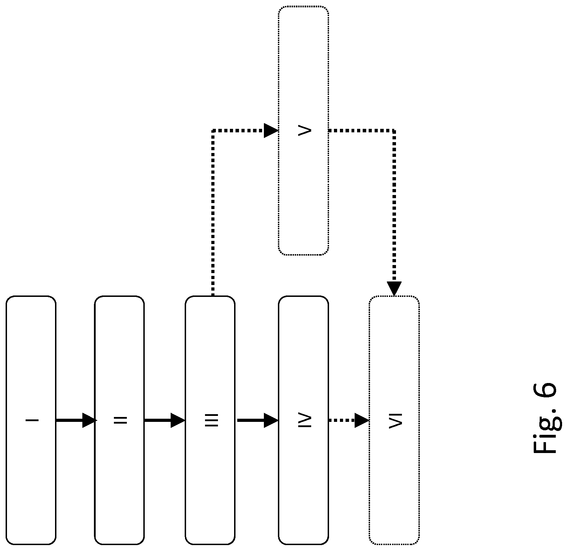

Ein verallgemeinerter Ablauf eines solchen Verfahrens ist in Fig. 6 dargestellt.

Das Verfahren sieht in einem ersten Verfahrensschritt I vor, zuerst eine Partie B1 des zunächst dunklen Lichtleiters 01 durch Einschalten einer Lichtquelle LQ 1 an einem der gegenüberliegenden Enden 30 eines Zuführungslichtleiters 03 aufleuchten zu lassen.

Anschließend sieht das Verfahren in einem auf den ersten Verfahrensschritt I folgenden zweiten Verfahrensschritt II vor, mindestens eine an die durch Einschalten der Lichtquelle LQ 1 im ersten Verfahrensschritt I aufleuchtende Partie B1 angrenzende Partie B2 durch Einschalten zumindest einer weiteren Lichtquelle LQ 2 an zumindest einem anderen Ende 30 eines Zuführungslichtleiters 03 aufleuchten zu lassen. Die im ersten Verfahrensschritt I aufleuchtende Partie B1 bleibt hierbei bevorzugt in ihrem aufleuchtenden Zustand.

Daraufhin sieht das Verfahren in einem auf den zweiten Verfahrensschritt II folgenden dritten Verfahrensschritt III vor, mindestens eine in der durch das Aufleuchten der Partie B1 durch das Einschalten der Lichtquelle LQ 1 im ersten Verfahrensschritt I und das darauffolgende Aufleuchten der Partie B2 durch das Einschalten der mindestens einen Lichtquelle LQ 2 im zweiten Verfahrensschritt II vorgegebenen, in Fig. 1, Fig. 2 durch Pfeile A beispielhaft dargestellten Richtung angrenzende Partie B3, B3.1 durch Einschalten wenigstens einer weiteren Lichtquelle LQ 3, LQ 3.1 an zumindest einem weiteren Ende 30 eines Zuführungslichtleiters 03 aufleuchten zu lassen. Die im zweiten Verfahrensschritt II aufleuchtende Partie B2 bleibt hierbei bevorzugt in ihrem aufleuchtenden Zustand. Die im ersten Verfahrensschritt I aufleuchtende Partie B1 bleibt ebenfalls bevorzugt in ihrem aufleuchtenden Zustand.

Das Verfahren wird so lange nach diesem Schema fortgesetzt, bis alle Partien B1, B2, B3, B3.1 aufleuchten, die durch Einschalten von an den Enden 30 der Zuführungslichtleiter 03 angeordneten Lichtquellen LQ 1, LQ 2, LQ 3, LQ 3.1 aufleuchten.

In einem vierten Verfahrensschritt IV schließlich sieht das Verfahren vor, nach dem Aufleuchten aller Partien B1, B2, B3, B3.1, die durch Einschalten von an den Enden 30 der Zuführungslichtleiter 03 angeordneten Lichtquellen LQ 1, LQ 2, LQ 3, LQ 3.1 aufleuchten, zuletzt die mindestens eine erste Lichtquelle LQ 4, LQ 4.1 des zentralen Auskoppellichtleiters 02 einzuschalten, wodurch zumindest die diesen zugeordneten Partien B4, B4.1 aufleuchten.

Das Verfahren sieht demnach vor, zuerst eine Partie B1 des zunächst dunklen Lichtleiters 01 durch Einschalten einer Lichtquelle LQ 1 an einem Ende 30 eines Zuführungslichtleiters 03 aufleuchten zu lassen, dann die Lichtquellen LQ 2, LQ 3, LQ 3.1 an den anderen Enden 30 der Zuführungslichtleiter 03 nacheinander einzuschalten, wodurch zunächst eine der Anzahl der mit individuell ansteuerbaren Lichtquellen LQ 1, LQ 2, LQ 3, LQ 3.1 versehenen Enden 30 der Zuführungslichtleiter 03 entsprechende Zahl von Partien B1, B2, B3, B3.1 der Lichtaustrittsfläche 21 des Auskoppellichtleiters 02 nacheinander aufleuchten, entsprechend einer zunehmenden Vergrößerung des lichtabstrahlenden Teils der Lichtaustrittsfläche 21 des Auskoppellichtleiters 02, und dann zum vollständigen Aufleuchten der Lichtaustrittsfläche 21 des Auskoppellichtleiters 02 zuletzt die mindestens eine erste Lichtquelle LQ 4, LQ 4.1 des zentralen Auskoppellichtleiters 02 einzuschalten.

Mit anderen Worten sieht das Verfahren vor, zuerst eine Partie B1 des zunächst dunklen Lichtleiters 01 durch Einschalten einer Lichtquelle LQ 1 an einem der gegenüberliegenden Enden 30 eines Zuführungslichtleiters 03 aufleuchten zu lassen, anschließend die leuchtende Fläche der Lichtaustrittsfläche 21 ausgehend von der aufleuchtenden Partie B1 durch aufleuchten der den Lichtquellen LQ 2, LQ 3, LQ 3.1 an den verbleibenden Enden 30 der Zuführungslichtleiter 03 zugeordneten Partien B2, B3, B3.1 nach und nach zu vergrößern, und dann zuletzt die volle Leuchtfläche 21 durch Einschalten der mindestens einen erste Lichtquelle LQ 4, LQ 4.1 des zentralen Auskoppellichtleiters (02) aufleuchten zu lassen.

Dabei kann durch Beibehaltung des Aufleuchtens der durch eine zuvor eingeschaltete Lichtquelle ausgeleuchteten Partie eine Vergrößerung des leuchtenden Teils der Lichtaustrittsfläche 21 oder durch Beendigung des Aufleuchtens der durch eine zuvor eingeschaltete Lichtquelle ausgeleuchteten Partie eine Lauflichtfunktion verwirklicht werden.

In einem in Fig. 6 durch gestrichelte Darstellung angedeuteten, gemeinsam mit dem vierten Verfahrensschritt IV auf den dritten Verfahrensschritt III folgenden optionalen fünften Verfahrensschritt V kann das Verfahren vorsehen, die Lichtquellen LQ 1, LQ 2, LQ 3, LQ 3.1 an den Enden 30 der Zuführungslichtleiter 03 mit dem Einschalten der mindestens einen ersten Lichtquelle LQ 4, LQ 4.1 des zentralen Auskoppellichtleiters 02 abzuschalten.

In einem in Fig. 6 durch gestrichelte Darstellung angedeuteten optionalen letzten Verfahrensschritt VI kann das Verfahren vorsehen, alle bis dato eingeschalteten Lichtquellen LQ 1, LQ 2, LQ 3, LQ 3.1, LQ 4, LQ 4.1 abzuschalten, woraufhin die gesamte Lichtaustrittsfläche 21 des Auskoppellichtleiters 02 wieder wie vor dem ersten Verfahrensschritt I dunkel ist.

Grundsätzlich kann das Verfahren auch umgekehrt ausgeführt werden, wobei die Lichtaustrittsfläche 21 zunächst voll und dann abnehmend aufleuchtet und schließlich wieder dunkel wird.

Wichtig ist hervorzuheben, dass das Verfahren vorsehen kann, dass wenn mehrere Lichtquellen LQ 3, LQ 3.1 an wenigstens einem Ende 30 eines Zuführungslichtleiters 03 und/oder wenn mehrere Lichtquellen LQ 4, LQ 4.1 beispielsweise an einem oder an gegenüberliegenden Enden 20 des zentralen Auskoppellichtleiters 02 vorgesehen sind, diese gemeinsam ein- und wieder ausgeschaltet werden, so als ob es sich hierbei um eine gemeinsame Lichtquelle handelte.

Das Verfahren kann entsprechend der Tabelle in Fig. 5 wie am in Fig. 1, Fig. 2, Fig. 4 dargestellten Leuchtmittel 100 erläutert vorsehen, die Lichtaustrittsfläche 21 von deren Mitte her unter stetiger Ausweitung der leuchtenden Fläche durch Hinzuschalten weiterer Partien B1, B2, B3, B3.1, B4, B4.1 aufleuchten zu lassen. Dies kann insbesondere im Hinblick auf eine zu verwirklichende Bremslichtfunktion vorteilhaft sein, etwa bei so genannten Central, High-Mounted Braking Lights beziehungsweise einer typischerweise hoch gesetzten dritten Bremsleuchte.

Alternativ kann das Verfahren eine einseitige Ausdehnung der leuchtenden Fläche von einem Rand der Lichtaustrittsfläche 21 zum gegenüberliegenden Rand vorsehen. Dies kann insbesondere im Hinblick auf eine zu verwirklichende Wiederholblinklichtfunktion vorteilhaft sein, etwa bei einem so genannten Wischen in Richtung der Richtung einer beabsichtigten Fahrtrichtungsanzeige bei einer Wiederholblinklichtfunktion.

Ebenfalls wichtig ist hervorzuheben, dass alternativ oder zusätzlich jeweils mehrere Lichtquellen an den Enden 30 der Zuführungslichtleiter 03 und/oder an einem oder an gegenüberliegenden Enden 20 des zentralen Auskoppellichtleiters 02 vorgesehen sein können, die einzeln, paar- oder gruppenweise Licht verschiedener Grundfarben abstrahlen. Durch segmentweise Einschalten von Lichtquellen jeweils gleicher Grundfarbe oder durch segmentweise Einschalten von Lichtquellen miteinander zu einer für eine Lichtfunktion erforderliche Lichtfarbe kombinierbarer Grundfarben können so alternativ oder zusätzlich zu einer segmentweisen Ausleuchtung der Lichtaustrittsfläche 21 des zentralen Auskoppellichtleiters 02 Lichtfarben für verschiedene Lichtfunktionen bereitgestellt werden, die dann beispielsweise durch unterschiedliche Abfolgen verschiedenartig dynamisch verwirklicht sein können. So kann beispielsweise für eine Wiederholblinklichtfunktion ein Wischen von innen nach außen verwirklicht sein und für eine Bremslichtfunktion eine beiderseitige Ausbreitung ausgehend von der Mitte der Lichtaustrittsfläche 21.

Vorteile gegenüber dem Stand der Technik sind die Verwirklichung dynamischer Lichtfunktionen mit einem homogenen Erscheinungsbild mit im Vergleich zu den älteren erwähnten Erfindungsmeldungen erprobter Technik bei gleichzeitig geringem Bauraumbedarf. Durch die Nutzung der gegenüberliegenden Enden der Zuführungslichtleiter zur Lichteinkopplung zwecks Ausleuchtung unterschiedlicher Partien der Lichtaustrittsfläche kann der Bauraumbedarf im Vergleich zum Stand der Technik um bis zur Hälfte oder sogar darüber hinaus verringert werden.

Der Lichtleiter und/oder das Leuchtmittel und/oder die Fahrzeugleuchte und/oder das Verfahren können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der voranstehenden Beschreibung zu den jeweils anderen Gegenständen der Erfindung erwähnte Merkmale aufweisen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Lichtleiter
- 02: Auskoppellichtleiter
- 03: Zuführungslichtleiter
- 04: Steg
- 05: Auskoppelstruktur
- 06: Blende
- 20: Ende (Auskoppellichtleiter)
- 21: Lichtaustrittsfläche
- 22: Auskoppellichtleiter-Lichteinkoppelfläche
- 30: Ende (Zuführungslichtleiter)
- 32: Zuführungslichtleiter-Lichteinkoppelfläche
- 50: Lichtumlenkfläche
- 100: Leuchtmittel
- 1000: Fahrzeugleuchte

- A: Pfeil (Animierrichtung)
- LQ 1: weitere Lichtquelle
- LQ 2: weitere Lichtquelle
- LQ 3: weitere Lichtquelle
- LQ 3.1: weitere Lichtquelle
- LQ 4: erste Lichtquelle
- LQ 4.1: erste Lichtquelle
- L1: Pfeil (Lichtausbreitung)
- L2: Pfeil (Lichtausbreitung)
- L3: Pfeil (Lichtausbreitung)
- B1: Partie der Lichtaustrittsfläche
- B2: Partie der Lichtaustrittsfläche
- B3: Partie der Lichtaustrittsfläche
- B4: Partie der Lichtaustrittsfläche
- B3.1: Partie der Lichtaustrittsfläche
- B4.1: Partie der Lichtaustrittsfläche

## Patentansprüche

1. Lichtleiter (01), umfassend einen zentralen Auskoppellichtleiter (02), der von mindestens zwei Zuführungslichtleitern (03) flankiert ist, wobei:
- der Auskoppellichtleiter (02) eine sich über zumindest einen Teil dessen Längsausdehnung erstreckende Lichtaustrittsfläche (21) für in ihn eingekoppeltes Licht und mindestens eine zur Einkopplung von von einer ersten Lichtquelle (LQ 4, LQ 4.1) abgestrahltes Licht vorgesehene Auskoppellichtleiter-Lichteinkoppelfläche (22) umfasst,
- die Zuführungslichtleiter (03) jeweils zwei gegenüberliegende Enden und eine Zuführungslichtleiter-Lichteinkoppelfläche (32) je Ende (30) jeden Zuführungslichtleiters (03) zur Einkopplung von von je mindestens einer weiteren Lichtquelle (LQ 1, LQ 2, LQ 3, LQ 3.1) an jedem Ende (03) abgestrahlten Lichts umfassen,
- die Zuführungslichtleiter (03) und der Auskoppellichtleiter (02) zumindest an Lichtüberkopplungsflächen (04), innerhalb denen Licht der Zuführungslichtleiter (03) jeweils in den Auskoppellichtleiter (02) übergekoppelt wird, zumindest optisch wirksam miteinander verbunden sind, und
- die Lichtaustrittsfläche in individuell ausleuchtbare Partien unterteilt ist, aus denen abhängig vom Betrieb der Lichtquellen an den Enden der Zuführungslichtleiter und abhängig vom Betrieb der Lichtquellen des Auskoppellichtleiters Licht austritt,
**dadurch gekennzeichnet, dass**
- die Anzahl der individuell ausleuchtbaren Partien der Lichtaustrittsfläche des Auskoppellichtleiters mindestens der doppelten Zahl der Zuführungslichtleiter entspricht, entsprechend der Anzahl der Enden der Zuführungslichtleiter, und
- die Zuführungslichtleiter (03) und/oder der Auskoppellichtleiter (02) eine derartige Auskoppelstruktur (05) aufweisen, dass eine segmentweise Ausleuchtung der Lichtaustrittsfläche (21) des Auskoppellichtleiters (02) in Abhängigkeit davon erfolgt, in welchen Zuführungslichtleiter (03) Licht von welcher Zuführungslichtleiter-Lichteinkoppelfläche (32) aus eingekoppelt wird.

2. Lichtleiter nach Anspruch 1, umfassend eine prismenförmige Auskoppelstruktur (05), wobei von einem ersten Ende eines Zuführungslichtleiters (03) eingekoppeltem Licht zugeordneten Prismen so ausgestaltet sind, dass diese Prismen das von dem ersten Ende her eingekoppelte Licht innerhalb einer ersten Partie der Lichtaustrittsfläche (21) aus dem Auskoppellichtleiter (02) auskoppeln, wohingegen diese Prismen diesem Licht gegenläufiges, von einem dem ersten Ende gegenüberliegenden zweiten Ende her eingekoppeltes Licht nicht in der ersten Partie auskoppeln, sondern in einer von der ersten Partie verschiedenen zweiten Partie der Lichtaustrittsfläche (21).

3. Lichtleiter nach Anspruch 1 oder 2, wobei der Auskoppellichtleiter (02) gegenüberliegend der Lichtaustrittsfläche (21) eine Lichtumlenkfläche (50) zumindest als Teil der Auskoppelstruktur (05) aufweist, welche das auf sie treffende Licht zur Lichtaustrittsfläche (21) hin unter einem solchen Winkel umlenkt, dass es dort aus dem Werkstoff des Lichtleiters (01) austritt.

4. Lichtleiter nach Anspruch 1, 2 oder 3, wobei die Zuführungslichtleiter (03) über die Lichtüberkopplungsflächen umfassende Stege (04) mit dem Auskoppellichtleiter (02) verbunden sind.

5. Lichtleiter nach einem der Ansprüche 1 bis 4, wobei eine volle Ausleuchtung der Lichtaustrittsfläche (21) des Auskoppellichtleiters (02) durch zumindest zusätzliche Lichteinstrahlung via der Auskoppellichtleiter-Lichteinkoppelfläche (22) erhalten wird.

6. Leuchtmittel (100) mit einem Lichtleiter nach einem der Ansprüche 1 bis 5, umfassend mindestens eine dem zentralen Auskoppellichtleiter (02) zugeordnete erste Lichtquelle (LQ 4, LQ 4.1) und mindestens jeweils eine weitere Lichtquelle (LQ 1, LQ 2, LQ 3, LQ 3.1) je Ende (30) jeden Zuführungslichtleiters (03).

7. Leuchtmittel nach Anspruch 6, wobei die erste Lichtquelle (LQ 4, LQ 4.1) und die weiteren Lichtquellen (LQ 1, LQ 2, LQ 3, LQ 3.1) unabhängig voneinander ansteuerbar sind.

8. Leuchtmittel nach Anspruch 6 oder 7, wobei an den Enden (30) der Zuführungslichtleiter (02) und/oder an einem oder an gegenüberliegenden Enden (20) des zentralen Auskoppellichtleiters (02) jeweils mehrere einzeln, paar- oder gruppenweise ansteuerbare, Licht verschiedener Grundfarben abstrahlende Lichtquellen (LQ 1, LQ 2, LQ 3, LQ 3.1, LQ 4, LQ 4.1) vorgesehen sind.

9. Fahrzeugleuchte (1000) mit zumindest einem zur Erfüllung wenigstens einer Lichtfunktion vorgesehenen oder einer vorgegebenen, insbesondere vorgeschriebenen Lichtverteilung der Lichtfunktion beitragenden Leuchtmittel (100) nach Anspruch 5, 6 oder 7, umfassend einen wenigstens zum Teil von einem Leuchtengehäuse und einer Lichtscheibe umschlossenen Leuchteninnenraum, welcher das Leuchtmittel (100) wenigstens zum Teil beherbergt.

10. Fahrzeugleuchte nach Anspruch 9, wobei die Zuführungslichtleiter hinter mindestens einer Blende verborgen angeordnet sind.

11. Fahrzeugleuchte nach Anspruch 9 oder 10, wobei sie Steuerungsmittel zur einzeln, paar- oder gruppenweise Ansteuerung der Lichtquellen des Leuchtmittels zur segmentweise dynamischen Ausleuchtung der Lichtaustrittsfläche des Lichtleiters umfasst.

12. Verfahren zur dynamischen, segmentweisen Ausleuchtung einer Lichtaustrittsfläche (21) eines Lichtleiters (01), welcher einen zentralen Auskoppellichtleiter (02) mit der Lichtaustrittsfläche (21) und mit wenigstens einer ersten Lichtquelle (LQ 4, LQ 4.1) umfasst, der von zumindest zwei Zuführungslichtleitern (03) mit jeweils zwei gegenüberliegenden Enden und mindestens einer weiteren Lichtquelle (LQ 1, LQ 2, LQ 3, LQ 3.1) je Ende (30) jeden Zuführungslichtleiters (03) flankiert ist, **dadurch gekennzeichnet, dass**:
- die Lichtaustrittsfläche (21) in eine Anzahl individuell ausleuchtbarer Partien (B1, B2, B3, B3.1, B4, B4.1) unterteilt ist, aus denen abhängig vom Betrieb der Lichtquellen (LQ 1, LQ 2, LQ 3, LQ 3.1, LQ 4, LQ 4.1) an den Enden (30, 20) der Zuführungslichtleiter (03) und des Auskoppellichtleiters (02) jeweils Licht austritt, und
- die Anzahl der individuell ausleuchtbaren Partien der Lichtaustrittsfläche des Auskoppellichtleiters mindestens der doppelten Zahl der Zuführungslichtleiter entspricht, entsprechend der Anzahl der Enden der Zuführungslichtleiter, wobei das
Verfahren vorsieht, zuerst eine Partie (B1) des zunächst dunklen Lichtleiters (01) durch Einschalten einer Lichtquelle (LQ 1) an einem Ende (30) eines Zuführungslichtleiters (03) aufleuchten zu lassen, anschließend die leuchtende Fläche der Lichtaustrittsfläche (21) ausgehend von der aufleuchtenden Partie (B1) durch aufleuchten der den Lichtquellen (LQ 2, LQ 3, LQ 3.1) an den verbleibenden Enden (30) der Zuführungslichtleiter (03) zugeordneten Partien (B2, B3, B3.1) nach und nach zu vergrößern, und dann zuletzt die volle Leuchtfläche (21) durch Einschalten der mindestens einen ersten Lichtquelle (LQ 4, LQ 4.1) des zentralen Auskoppellichtleiters (02) aufleuchten zu lassen.

13. Verfahren nach Anspruch 12, wobei das Verfahren am Ende vorsieht, alle Lichtquellen (LQ 1, LQ 2, LQ 3, LQ 3.1, LQ 4, LQ 4.1) abzuschalten.

14. Verfahren nach Anspruch 12 oder 13, wobei die Lichtquellen (LQ 1, LQ 2, LQ 3, LQ 3.1) an den Enden (30) der Zuführungslichtleiter (03) mit dem Einschalten der ersten Lichtquelle (LQ 4, LQ 4.1) des Auskoppellichtleiters (02) abgeschaltet werden.

15. Verfahren nach einem der Ansprüche 12, 13 oder 14, wobei wenn mehrere Lichtquellen (LQ 1, LQ 2, LQ 3, LQ 3.1, LQ 4, LQ 4.1) an einem Ende (30) eines Zuführungslichtleiters (03) und/oder an einem oder an gegenüberliegenden Enden (20) des Auskoppellichtleiters (02) vorgesehen sind, diese gemeinsam eingeschaltet werden.

## Claims

1. A light guide (01), comprising a central outcoupling light guide (02) flanked by at least two supply light guides (03), wherein:
- the outcoupling light guide (02) comprises a light emitting surface (21) extending over at least a part of its longitudinal extension for light coupled into the outcoupling light guide (02) and at least one light incoupling surface for the outcoupling light guide (22) provided to couple in light emitted from a first light source (LQ 4, LQ 4.1),
- the supply light guides (03) each comprise two opposite ends and per end (30) of each supply light guide (03) a light incoupling surface for the supply light guide (32) to couple in light emitted at each end (30) from each of at least one further light source (LQ 1, LQ 2, LQ 3, LQ 3.1),
- the supply light guides (03) and the outcoupling light guide (02) are at least in an optically effective manner connected to each other, at least at light transcoupling surfaces (04) within which light from the supply light guides (03) is in each instance transcoupled into the outcoupling light guide (02), and
- the light emitting surface is subdivided into individually illuminable sections from which light is emitted depending on the operation of the light sources at the ends of the supply light guides and depending on the operation of the light sources of the outcoupling light guide,
**characterised in that**
- the number of individually illuminable sections of the light emitting surface of the outcoupling light guide is at least double the number of the supply light guides, corresponding to the number of the ends of the supply light guides, and
- **in that** the supply light guides (03) and/or the outcoupling light guide (02) have/has such an outcoupling structure (05) that a segmental illumination of the light emitting surface (21) of the outcoupling light guide (02) is carried out depending on which supply light guide (03) light is coupled into coming from which light incoupling surface for the supply light guide (32).

2. The light guide according to claim 1, comprising a prism-shaped outcoupling structure (05), wherein prisms associated with light coupled in from a first end of a supply light guide (03) are configured such that these prisms couple out the light, which is coupled in from the first end, through the outcoupling light guide (02) within a first section of the light emitting surface (21), whereas these prisms do not couple out oppositely directed light, which is coupled in from a second end opposite the first end, within the first section, but rather within a second section of the light emitting surface (21) that differs from the first section.

3. The light guide according to claim 1 or 2, wherein the outcoupling light guide (02) has a light deflection surface (50), at least as part of the outcoupling structure (05), opposite the light emitting surface (21), which light deflection surface (50) deflects the light impacting it toward the light emitting surface (21) under such an angle that the light is emitted there out of the material of the light guide (01).

4. The light guide according to claim 1, 2, or 3, wherein the supply light guides (03) are connected to the outcoupling light guide (02) by bridges (04) comprising light transcoupling surfaces.

5. The light guide according to one of the claims 1 to 4, wherein a full illumination of the light emitting surface (21) of the outcoupling light guide (02) is obtained by at least additional light irradiation via the light incoupling surface for the outcoupling light guide (22).

6. An illuminant (100) with a light guide according to one of the claims 1 to 5, comprising at least one first light source (LQ 4, LQ 4.1) assigned to the central outcoupling light guide (02) and at least in each instance one further light source (LQ 1, LQ 2, LQ 3, LQ 3.1) for each end (30) of each supply light guide (03).

7. The illuminant according to claim 6, wherein the first light source (LQ 4, LQ 4.1) and the further light sources (LQ 1, LQ 2, LQ 3, LQ 3.1) are controllable independently of one another.

8. The illuminant according to claim 6 or 7, wherein in each instance a plurality of individually, pairwise, or groupwise controllable light sources (LQ 1, LQ 2, LQ 3, LQ 3.1, LQ 4, LQ 4.1) emitting light of different primary colours are provided at the ends (30) of the supply light guides (03) and/or at one end or at opposite ends (20) of the central outcoupling light guide (02).

9. A vehicle lamp (1000) with at least one illuminant (100) according to claim 5, 6, or 7, the illuminant (100) being provided to fulfil at least one light function or contributing to the fulfilment of a specified, in particular, of a required light distribution of the light function, the vehicle lamp (1000) comprising a lamp interior, which is at least partly enclosed by a lamp housing and a light lens, the lamp interior at least partly accommodating the illuminant (100).

10. The vehicle lamp according to claim 9, wherein the supply light guides are arranged to be concealed behind at least one cover.

11. The vehicle lamp according to claim 9 or 10, wherein the vehicle lamp comprises control means for the individual, pairwise, or groupwise control of the light sources of the illuminant for the purpose of the segmental, dynamic illumination of the light emitting surface of the light guide.

12. A method for the dynamic, segmental illumination of a light emitting surface (21) of a light guide (01) comprising a central outcoupling light guide(02) with the light emitting surface (21) and with at least one first light source (LQ 4, LQ 4.1) and being flanked by at least two supply light guides (03) with in each instance two opposite ends and per end (30) of each supply light guide (03) at least one further light source (LQ 1, LQ 2, LQ 3, LQ 3.1), the method **characterised in that**:
- the light emitting surface (21) is subdivided into a number of individually illuminable sections (B1, B2, B3, B3.1, B4, B4.1) from which light is emitted in each instance depending on the operation of the light sources (LQ 1, LQ 2, LQ 3, LQ 3.1, LQ 4, LQ 4.1) at the ends (30, 20) of the supply light guides (03) and of the outcoupling light guide (02), and
- the number of individually illuminable sections of the light emitting surface of the outcoupling light guide is at least double the number of the supply light guides, corresponding to the number of the ends of the supply light guides,
wherein the method provides to first have a section (B1) of the initially dark light guide (01) light up by switching on a light source (LQ 1) at one end (30) of a supply light guide (03), to subsequently gradually increase the luminous area of the light emitting surface (21) by lighting up, starting from the lit up section (B1), the sections (B2, B3, B3.1) assigned to the light sources (LQ 2, LQ 3, LQ 3.1) at the remaining ends (30) of the supply light guides (03), and to then have the full luminous surface (21) light up in a final step by switching on the at least one first light source (LQ 4, LQ 4.1) of the central outcoupling light guide (02).

13. The method according to claim 12, wherein the method finally provides all light sources (LQ 1, LQ 2, LQ 3, LQ 3.1, LQ 4, LQ 4.1) to be switched off.

14. The method according to claim 12 or 13, wherein the light sources (LQ 1, LQ 2, LQ 3, LQ 3.1) at the ends (30) of the supply light guides (03) are switched off with the first light source (LQ 4, LQ 4.1) of the outcoupling light guide (02) being switched on.

15. The method according to one of the claims 12, 13, or 14, wherein, in the instance of a plurality of light sources (LQ 1, LQ 2, LQ 3, LQ 3.1, LQ 4, LQ 4.1) being provided at one end (30) of a supply light guide (03) and/or at one end or at opposite ends (20) of the outcoupling light guide (02), these light sources are switched on together.

## Revendications

1. Conducteur de lumière (01) comprenant un conducteur de lumière central de découplage (02) flanqué d'au moins deux conducteurs de lumière d'alimentation (03) :
- le conducteur de lumière de découplage (02) comprenant une surface de sortie de lumière (21), s'étirant sur au moins une partie de son allongement longitudinal, pour la lumière couplée en son intérieur, et au moins une surface de couplage de lumière de conducteur de lumière de découplage (22) prévu pour coupler de la lumière émise par une première source lumineuse (LQ 4, LQ 4.1),
- les conducteurs de lumière d'alimentation (03) comprenant chacun deux extrémités opposées l'une à l'autre et une surface de couplage de lumière de conducteur de lumière d'alimentation (32) par extrémité (30) de chaque conducteur de lumière d'alimentation (03) pour coupler de la lumière émise respectivement par au moins une autre source lumineuse (LQ 1, LQ 2, LQ 3, LQ 3.1) à chaque extrémité (30),
- les conducteurs de lumière d'alimentation (03) et le conducteur de lumière de découplage (02) étant reliés les uns aux autres au moins dans un effet optique au moins à des surfaces de couplage de lumière (04), au sein desquelles de la lumière des conducteurs de lumière d'alimentation (03) est respectivement surcouplée dans le conducteur de lumière de découplage (02), et
- la surface de sortie de lumière est divisée en zones illuminables de manière individuelle, dont émane de la lumière en fonction du fonctionnement des sources lumineuses aux extrémités des conducteurs de lumière d'alimentation et en fonction du fonctionnement des sources lumineuses du conducteur de lumière de découplage,
**caractérisé en ce que**
- le nombre de zones illuminables de manière individuelle, de la surface de sortie de lumière du conducteur de lumière de découplage correspond au moins au double du nombre de conducteurs de lumière d'alimentation, soit au nombre des extrémités des conducteurs de lumière d'alimentation, et
- les conducteurs de lumière d'alimentation (03) et/ou le conducteur de lumière de découplage (02) présentent une structure de découplage (05) telle qu'un éclairage par segment de la surface de sortie de lumière (21) du conducteur de lumière de découplage (02) dépend du conducteur de lumière d'alimentation (03) dans lequel de la lumière est couplée et à partir de quelle surface de couplage de lumière de conducteur de lumière d'alimentation (32) c'est le cas.

2. Conducteur de lumière selon la revendication 1, comprenant une structure de découplage en forme de prisme (05), des prismes associés à de la lumière couplée par une première extrémité d'un conducteur de lumière d'alimentation (03) étant réalisés de telle sorte que lesdits prismes découplent du conducteur de lumière de découplage (02) la lumière couplée par la première extrémité à l'intérieur d'une première zone de la surface de sortie de lumière (21), alors que lesdits prismes ne découplent de la lumière qui va dans le sens inverse de ladite lumière et qui est couplée par une deuxième extrémité en vis-à-vis de la première extrémité, non pas dans la première zone mais dans une deuxième zone de la surface de sortie de lumière (21) différente de la première zone.

3. Conducteur de lumière selon la revendication 1 ou 2, le conducteur de lumière de découplage (02) présentant en vis à vis de la surface de sortie de lumière (21), une surface de déviation de la lumière (50) au moins en tant que pièce de la structure de découplage (05), laquelle dévie la lumière incidente en direction de la surface de sortie de lumière (21) dans un angle tel qu'elle y émane du matériau du conducteur de lumière (01).

4. Conducteur de lumière selon la revendication 1, 2 ou 3, les conducteurs de lumière (03) étant reliés au conducteur de lumière de découplage (02) par des passerelles (04) comprenant les surfaces de surcouplage de lumière.

5. Conducteur de lumière selon l'une quelconque des revendications 1 à 4, un éclairage complet de la surface de sortie de lumière (21) du conducteur de lumière de découplage (02) étant obtenu par au moins un supplément d'insolation lumineuse par le biais de la surface de couplage de lumière du conducteur de lumière de découplage (22).

6. Moyen d'éclairage (100) doté d'un conducteur de lumière selon l'une quelconque des revendications 1 à 5, comprenant au moins une première source lumineuse (LQ 4, LQ 4.1) associée au conducteur de lumière de découplage central (02) et au moins respectivement une autre source lumineuse (LQ 1, LQ 2, LQ 3, LQ 3.1) par extrémité (30) de chaque conducteur de lumière d'alimentation (03).

7. Moyen d'éclairage selon la revendication 6, la première source lumineuse (LQ 4, LQ 4.1) et les autres sources lumineuses (LQ 1, LQ 2, LQ 3, LQ 3.1) pouvant être pilotées indépendamment les unes des autres.

8. Moyen d'éclairage selon la revendication 6 ou 7, plusieurs sources lumineuses (LQ 1, LQ 2, LQ 3, LQ 3.1, LQ 4, LQ 4.1), qui émettent de la lumière de couleurs primaires différentes, et qui peuvent être pilotées de manière distincte, deux par deux ou en groupe, étant prévues aux extrémités (30) des conducteurs de lumière d'alimentation (03) et/ou à une ou à des extrémités (20), en vis-à-vis l'une de l'autre, du conducteur de lumière de découplage central (02).

9. Phare de véhicule (1000) doté d'au moins un moyen d'éclairage (100) selon la revendication 5, 6 ou 7, prévu pour remplir au moins une fonction d'éclairage ou participant à une répartition lumineuse de la fonction d'éclairage donnée, notamment prescrite, comprenant un espace intérieur de phare entouré au moins partiellement d'un boîtier de phare et d'un diffuseur, lequel espace intérieur abritant au moins partiellement le moyen d'éclairage (100).

10. Phare de véhicule selon la revendication 9, les conducteurs de lumière d'alimentation étant agencés cachés derrière au moins un diaphragme.

11. Phare de véhicule selon la revendication 9 ou 10, comprenant des moyens de commande permettant de piloter de manière individuelle, deux par deux ou en groupe, les sources lumineuses du moyen d'éclairage destinées à illuminer de manière dynamique par segment la surface de sortie de lumière du conducteur de lumière.

12. Procédé d'illumination dynamique par segment, d'une surface de sortie de lumière (21) d'un conducteur de lumière (01) qui comprend un conducteur de lumière de découplage central (02) doté de ladite surface de sortie de lumière (21) et d'au moins une première source lumineuse (LQ 4, LQ 4.1), qui est flanqué d'au moins deux conducteurs de lumière d'alimentation (03) dotés chacun de deux extrémités en vis-à-vis l'une de l'autre et d'au moins une autre source lumineuse (LQ 1, LQ 2, LQ 3, LQ 3.1) par extrémité (30) de chaque conducteur de lumière d'alimentation (03), **caractérisé en ce que** :
- la surface de sortie de lumière (21) est divisée en un nombre de zones qui peuvent être illuminées de manière individuelle (B1, B2, B3, B3.1, B4, B4.1), dont émane respectivement de la lumière en fonction du fonctionnement des sources lumineuses (LQ 1, LQ 2, LQ 3, LQ 3.1., LQ 4, LQ 4.1) aux extrémités (30, 20) des conducteurs de lumière d'alimentation (03) et du conducteur de lumière de découplage (02), et
- le nombre de zones, illuminables de manière individuelle, de la surface de sortie de lumière du conducteur de lumière de découplage correspond au moins au double du nombre de conducteurs de lumière d'alimentation, soit au nombre des extrémités des conducteurs de lumière d'alimentation,
ledit procédé prévoyant d'éclairer tout d'abord une zone (B1) du conducteur de lumière (01), qui est dans l'obscurité dans un premier temps, en allumant une source lumineuse (LQ 1) à une extrémité (30) d'un conducteur de lumière d'alimentation (03), pour ensuite agrandir peu à peu la surface lumineuse de la surface de sortie de lumière (21) à partir de la zone éclairée (B1) en éclairant les zones (B2, B3, B3.1) associées aux sources lumineuses (LQ 2, LQ 3, LQ 3.1) aux extrémités (30) restantes des conducteurs de lumière d'alimentation (03), pour finir par éclairer la surface lumineuse (21) complète en allumant ladite au moins une source lumineuse (LQ 4, LQ 4.1) du conducteur de lumière de découplage central (02).

13. Procédé selon la revendication 12, le procédé prévoyant à la fin d'éteindre toutes les sources lumineuses (LQ 1, LQ 2, LQ 3, LQ 3.1, LQ 4, LQ 4.1).

14. Procédé selon la revendication 12 ou 13, les sources lumineuses (LQ 1, LQ 2, LQ 3, LQ 3.1) aux extrémités (30) des conducteurs de lumière d'alimentation (03) étant éteintes au moment où la première source lumineuse (LQ 4, LQ 4.1) du conducteur de lumière de découplage (02) est allumée.

15. Procédé selon l'une quelconque des revendications 12, 13 ou 14, dans lequel si plusieurs sources lumineuses (LQ 1, LQ 2, LQ 3, LQ 3.1, LQ 4, LQ 4.1) sont prévues à une extrémité (30) d'un conducteur de lumière d'alimentation (03) et/ou à une ou à des extrémités (20), en vis-à-vis l'une de l'autre, du conducteur de lumière de découplage (02), ces sources lumineuses sont allumées ensemble.
